# EUROPÄISCHE PATENTSCHRIFT

(11) **EP 4 202 393 B1**
(45) Veröffentlichungstag und Bekanntmachung des Hinweises auf die Patenterteilung: **13.08.2025**
(21) Anmeldenummer: 22210741.9
(22) Anmeldetag: 01.12.2022
(51) Int. Cl.: G01M 1/04, B23B 31/26

(54) **SPANNVORRICHTUNG ZUM SPANNEN EINES BAUTEILS AN EINEM MASCHINENELEMENT EINER BEARBEITUNGSMASCHINE**
CLAMPING DEVICE FOR CLAMPING A COMPONENT ON A MACHINE ELEMENT OF A MACHINE TOOL
DISPOSITIF DE SERRAGE POUR SERRER UN COMPOSANT SUR UN ÉLÉMENT DE MACHINE D'UNE MACHINE D'USINAGE

(30) Priorität: 22.12.2021 DE 102021134370
(43) Veröffentlichungstag der Anmeldung: 28.06.2023
(73) Patentinhaber: Haimer GmbH, 86568 Hollenbach-Igenhausen (DE)
(72) Erfinder: Haimer, Franz-Josef, 86568 Hollenbach-Igenhausen (DE)

(56) Entgegenhaltungen:
- EP-A1- 0 339 321
- EP-A1- 0 507 147
- DE-A1- 102012 108 143
- DE-A1- 102014 224 198
- US-A- 4 844 671

## Beschreibung

Die Erfindung betrifft eine Spannvorrichtung zum Spannen eines Bauteils an einem Maschinenelement einer Bearbeitungsmaschine.

Aus der EP 0 339 321 A1 ist eine solche Spannvorrichtung zum Spannen eines Bauteils bekannt.

Dabei sind dort - für das Zusammenwirken mit der Spannvorrichtung beim Spannen - an dem zu spannenden Bauteil ein hohler Zentrier-Ansatz, eine den Zentrier-Ansatz umgebende Anlagefläche sowie eine innen im Ansatz eingearbeitete Ringnut, die eine sich zum freien Ansatzende hin konisch verjüngende Nutflanke aufweist, vorgesehen.

Ein Grundkörper der Spannvorrichtung aus der EP 0 339 321 A1 weist eine dem Ansatz des zu spannenden Bauteils angepasste Aufnahmebohrung auf, die von einer Stirnfläche umgeben ist, an welche die Anlagefläche des Bauteils anpressbar ist.

In dem Grundkörper sind mehrere einzelne bzw. separate, d.h. miteinander nicht verbunden, Spannklauen vorgesehen, die sich jeweils mit ihrem einen ersten Ende an einer Nutflanke im Grundkörper abstützen.

Radial innerhalb der mehreren Spannklauen ist axial beweglich eine Spannhülse angeordnet, die im Bereich der beiden Enden der Spannklauen je einen Spannkegel aufweist, mittels dem die mehreren Spannklauen parallel zu sich selbst radial nach außen bewegbar und ihre Enden an die zugehörigen Nutflanken - von zu spannendem Bauteil und Grundkörper - anpressbar sind.

Die mehreren Spannklauen weisen an ihren beiden Enden Spannflächen auf, deren Winkellage bezüglich der Zentralachse (A) den Nutflanken von zu spannendem Bauteil und Grundkörper angepasst ist, so dass während des gesamten Spannvorganges Flächenberührung zwischen den Spannflächen der mehreren Spannklauen und den Nutflanken von zu spannendem Bauteil und Grundkörper besteht.

Nachteilig mag an dieser Spannvorrichtung ihr komplexer Aufbau sowie ihre auf bestimmte Geometrien bei von zu spannenden Bauteilen beschränkte Einsatzmöglichkeit sein.

Es ist Aufgabe der Erfindung, die im Stand der Technik bekannte Spannvorrichtung zu verbessern, insbesondere zu vereinfachen, sowie eine einfache und doch positionsgenaue, sichere und reproduzierbare Aufnahme und Halterung eines zu spannenden Bauteils zu ermöglichen.

Diese Aufgabe wird gelöst durch eine Spannvorrichtung zum Spannen eines Bauteils an einem Maschinenelement einer Bearbeitungsmaschine mit den Merkmalen des unabhängigen Anspruchs.

Vorteilhafte Weiterbildungen der Erfindung sind Gegenstand abhängiger Ansprüche sowie der nachfolgenden Beschreibung.

Gegebenenfalls verwendete Begriffe, wie oben, unten, vorne, hinten, links oder rechts sind - soweit nicht anders explizit definiert - nach üblichem Verständnis zu verstehen. Begriffe, wie radial und axial, sind, soweit verwendet und nicht anders explizit definiert, in Bezug auf Mittel- bzw. Symmetrieachsen hier beschriebener Bauteile/Komponenten zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Die Spannvorrichtung zum, hier formschlüssigen, Spannen eines Bauteils an einem Maschinenelement einer Bearbeitungsmaschine sieht einen Grundkörper mit einer Aufnahmeöffnung für das zu spannende Bauteil, eine innerhalb des Grundkörpers axial beweglich angeordnete Spannzange mit Spannzungen zum zentrischen Spannen des Bauteils und ein zwischen einer Spannstellung und Lösestellung axial verstellbares Betätigungselement zur Betätigung der Spannzange vor.

Die Spannzungen der Spannzange weisen dabei einen dem zu spannenden Bauteil zugeordneten vorderen Spannbereich und einen dem Grundkörper zugeordneten hinteren Spannbereich auf.

Das Betätigungselement sieht eine dem vorderen Spannbereich der Spannzungen zugeordnete erste äußere Konusfläche und mindestens eine dem hinteren Spannbereich der Spannzungen zugeordnete zweite äußere Konusfläche vor.

Zu einem, hier dann formschlüssigen, Eingriff in ein Gewinde des zu spannenden Bauteils sind an dem dem zu spannenden Bauteil zugeordneten vorderen Spannbereich der Spannzungen Formschlusselemente angeordnet.

Insbesondere können die Formschlusselemente Gewindesegmente, insbesondere Außengewindesegmente oder Außengewindesegmente mit abgerundeten Gewindespitzen, welche sicherstellen, dass die Außengewindesegmente an dem Innengewinde abgleiten, sein. Zweckmäßig kann es weiter hier auch sein, dass die Außengewindesegmente derart an den Spannzungen angeordnet sind, dass sie, wenn die Spannzungen mittels der Konusflächen komplett radial nach außen verschoben sind, ein zwar unterbrochenes, aber einen fortlaufenden Gewindegang oder mehrere fortlaufende Gewindegänge ausbildendes Außengewinde ergeben - zu einer Formschlussverbindung, d.h. einer (Schraub-)Verbindung, mit einem in einer axialen Öffnung des zu spannenden Bauteils angeordneten korrespondierenden Innengewinde.

Ferner ist auch zweckmäßig, wenn die erste Konusfläche und/oder die zweite Konusfläche an dem Betätigungselement derart ausgebildet sind bzw. ist, dass bei komplett radial nach außen verschobenen Spannzungen die Formschlusselemente, insbesondere Außengewindesegmente bzw. die Außengewindesegmente, nicht vollständig in ein bzw. das Innengewinde in einer axialen Öffnung des zu spannenden Bauteils eingreifen.

Weiter kann dann auch vorgesehen sein, dass die zweite Konusfläche so gegenüber der ersten Konusfläche axial versetzt ist, dass bei einer Verschiebung des Betätigungselements aus der Lösestellung in die Spannstellung zunächst die erste Konusfläche (erster Eingriff) und später die zweite Konusfläche in Eingriff mit den Spannzungen gelangt (zweiter Eingriff).

Wenn dann hier zunächst die erste Konusfläche in Eingriff gelangt (erster Eingriff), ist es zweckmäßig, wenn die Spannzungen rein radial in dem Grundkörper verschoben werden, und wenn dann später die zweite Konusfläche in Eingriff gelangt (zweiter Eingriff), ist es zweckmäßig, wenn die Spannzungen radial und axial in dem Grundkörper verschoben werden.

Hierzu mag es auch zweckmäßig sein, wenn - beim ersten Eingriff - die entsprechenden dort in den ersten Eingriff gelangenden ersten Eingriffsflächen an den Spannzungen einen (Innen-)Zylinder (ggfl. angefast oder konisch) bilden und/oder wenn - beim zweiten Eingriff - die entsprechenden dort in den zweiten Eingriff gelangenden zweiten Eingriffsflächen an den Spannzungen einen (Außen-)Konus bilden.

Gelangen Konusflächen des Betätigungselements in Eingriff, kann darüber eine radiale Verschiebung des Gegenelements, wie hier der Spannzange, realisiert werden; über eine Zwangsbedingung bzw. -führung an dem Gegenelement kann darüber hinaus dann auch eine axiale Verschiebung des Gegenelements realisiert werden.

Bei einer anderen Ausgestaltung kann es vorgesehen sein, dass die zweite Konusfläche so gegenüber der ersten Konusfläche axial versetzt ist, dass bei einer Verschiebung des Betätigungselements aus der Lösestellung in die Spannstellung die erste äußere Konusfläche und die zweite Konusfläche gleichzeitig in Eingriff mit den Spannzungen gelangt (erster gemeinsamer/gleichzeitiger Eingriff).

Wenn dann hier gleichzeitig die erste und die zweite Konusfläche in Eingriff mit den Spanzungen gelangen (erster gemeinsamer/gleichzeitiger Eingriff), ist es zweckmäßig, wenn dabei die Spannzungen radial und axial in dem Grundkörper verschoben werden.

Hierzu mag es auch zweckmäßig sein, wenn - beim ersten gemeinsamen/gleichzeitigen Eingriff - zumindest (entweder) die ersten von den entsprechenden dort in den gleichzeitigen Eingriff gelangenden Eingriffsflächen an den Spannzungen oder zumindest die zweiten von den dort in den gleichzeitigen Eingriff gelangenden Eingriffsflächen an den Spannzungen einen (Innen-)Konus bilden. Die andere ersten bzw. zweiten Eingriffsflächen an den Spannzungen - beim ersten gemeinsamen/gleichzeitigen Eingriff - können einen (Innen-)Zylinder (- oder aber auch einen (Innen-)Konus) bilden.

Gelangen Konusflächen des Betätigungselements in Eingriff, kann darüber eine radiale Verschiebung des Gegenelements, wie hier der Spannzange, realisiert werden; über eine Zwangsbedingung bzw. -führung an dem Gegenelement kann darüber hinaus dann auch eine axiale Verschiebung des Gegenelements realisiert werden.

Weiter kann auch vorgesehen sein, dass die Spannzungen an der Außenseite, insbesondere an der Außenseite im Bereich des hinteren Spannbereichs, eine äußere konische Anlagefläche zur Anlage an einer inneren konischen Spannfläche des Grundkörpers aufweisen.

Weiter kann hier dann vorgesehen sein, dass die innere konische Spannfläche des Grundkörpers so an dem Grundkörper angeordnet ist, dass, wenn bei einer Verschiebung des Betätigungselements bei einem Lösen von der Spannstellung in die Lösestellung, die innere konische Spannfläche des Grundkörpers in Eingriff mit der äußeren konischen Anlagefläche der Spannzungen gelangt, die Spannzungen zumindest radial (auch möglich und zweckmäßig radial und axial) in dem Grundkörper verschoben werden.

Gelangen nämlich - wie beispielsweise auch hier bei diesem Eingriff - zwei Konusflächen aneinander in einen Eingriff, so kann dadurch auch hier zumindest eine radiale (oder auch eine axiale und radiale) Verschiebung eines Bauteils bewirkt werden.

Weiterhin kann auch vorgesehen sein, dass die Spannzungen der Spannzange an einem hülsenförmigen Sockel angeordnet sind.

Dabei ist es auch zweckmäßig, wenn die Spannzungen der Spannzange durch axiale vordere Schlitze voneinander getrennt sind und/oder dass in dem Sockel zu den vorderen Schlitzen axial ausgerichtete hintere Schlitze angeordnet sind, die zu den vorderen Schlitzen hin offen und nach hinten geschlossen sind.

Bei einer anderen Ausgestaltung kann vorgesehen sein, dass die Spannzungen der Spannzange separate einzelne Bauteile sind, insbesondere vier, fünf, sechs, sieben oder acht Spannzungen.

Diese können zweckmäßigerweise auch ringförmig und/oder zentrisch um das Betätigungselement angeordnet sein.

Weiter kann hier dann auch vorgesehen sein, dass eine, insbesondere vorgespannte und/oder gefedert gelagerte, Führungsplatte mit mit den Spannzungen im Eingriff stehenden Führungselementen, beispielsweise Stege (mit Nuten), zur radialen Führung der Spannzungen (beispielsweise für die radiale Verschiebung bei den oben beschriebenen Eingriffen) und/oder zu einer Verdrehsicherung der Spannzungen vorgesehen ist.

Auch kann vorgesehen sein, dass die Spannzange (so auch im Falle ihrer hülsenförmigen Ausgestaltung (vgl. auch vorgespannte Führungsplatte im Falle einer mit separaten Spannzungen ausgebildeten Spannzange)) an ihrem unteren Ende durch Druckfedern beaufschlagt ist.

Dabei kann es zweckmäßig sein, wenn zwischen dem unteren Ende der Spannzange und den Druckfedern eine Druckscheibe, beispielsweise als die beschriebene Führungsplatte, angeordnet ist.

Ferner kann es sich als zweckmäßig erweisen, wenn die Spannzange über einen Lagerring axial verschiebbar in dem Grundkörper angeordnet ist.

Auch kann vorgesehen sein, dass in der axialen Aufnahmeöffnung des Grundkörpers eine Lagerbuchse - insbesondere zum erleichterten Einsetzen des zu spannenden Bauteils - angeordnet ist und/oder dass das Betätigungselement über eine Lagerbuchse in dem Grundkörper gelagert ist.

Weiterhin erweist es sich als zweckmäßig, wenn das Betätigungselement eine erste und/oder zweite Mitnehmerfläche aufweist, welche bei einer Verschiebung des Betätigungselements beim Spannen aus der Lösestellung in die Spannstellung bzw. beim Lösen aus der Spannstellung in die Lösestellung in eine Anlage mit einer ersten und/oder zweiten Anlagefläche an der Spannzange gelangen/gelangt.

Auch kann vorgesehen sein, dass die Spannzange eine dritte Mitnehmerfläche aufweist, welche bei einer Verschiebung des Betätigungselements beim Lösen aus der Spannstellung in die Lösestellung in eine Anlage mit einer dritten Anlagefläche an dem zu spannenden Bauteil gelangt. Über diese dritte Mitnehmerfläche an der Spannzange kann so beispielsweise das zu spannende Bauteil aus der Aufnahmeöffnung im Grundkörper ausgestoßen werden.

Ferner erweist es sich als zweckmäßig, wenn Anschlusselemente an dem Betätigungselement vorgesehen sind - für den Anschluss des Betätigungselements an eine (Betätigungs-)Vorrichtung, mittels welcher das Betätigungselement zum Spannen und/oder Lösen verschiebbar ist, insbesondere eine hydraulische, pneumatische oder mechanische (Betätigungs-)Vorrichtung.

Auch kann es zweckmäßig sein, wenn der Grundkörper mittels einer (Druck-)Feder gegen eine Betätigungsvorrichtung bzw. die (Betätigungs-)Vorrichtung, insbesondere einem, insbesondere hydraulisch oder pneumatisch oder mechanisch betätigbaren, Kolben verspannbar ist, welche Druckfeder insbesondere in Sacklöcher in dem Grundkörper und/oder in der Betätigungsvorrichtung aufgenommen ist.

Kann dann die Betätigungsvorrichtung bzw. der Kolben - entgegen der Federkraft - das Betätigungselement relativ zu der Spannzange verschieben, kann so - je nach "Anlage" der Spannrelativbewegungsrichtung (Relativbewegung erster Richtung) bzw. Gegen-/Löserelativbewegungsrichtung (Relativbewegung zweiter Richtung) - das Spannen oder das Lösen bewirkt werden.

Die erfindungsgemäße Bearbeitungsmaschine, beispielsweise eine Wuchtvorrichtung oder eine Messvorrichtung oder eine Vorrichtung zu einer Fertigung und/oder Formgebung des zu spannenden Bauteils, sieht dann so die erfindungsgemäße Spannvorrichtung, beispielsweise einen Auswucht- oder Messadapter, vor, wobei das zu spannende Bauteil ein Werkzeughalter, insbesondere mit einem Steilkegel, oder ein Werkstück sein kann.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine Ansicht einer Spannvorrichtung (Auswucht- oder Messadapter) gemäß einer ersten erfindungsgemäßen Ausführung in einer Lösestellung,
- FIG 2: eine Ansicht der Spannvorrichtung (Auswucht- oder Messadapter) gemäß der ersten erfindungsgemäßen Ausführung in einer Spannstellung,
- FIG 3: eine Ansicht einer Spannvorrichtung (Auswucht- oder Messadapter) gemäß einer zweiten erfindungsgemäßen Ausführung in einer Lösestellung,
- FIG 4: eine Ansicht der Spannvorrichtung (Auswucht- oder Messadapter) gemäß der zweiten erfindungsgemäßen Ausführung in einer Spannstellung,
- FIG 5: eine Ansicht einer Spannvorrichtung (Auswucht- oder Messadapter) gemäß einer dritten erfindungsgemäßen Ausführung in einer Lösestellung,
- FIG 6: eine Ansicht der Spannvorrichtung (Auswucht- oder Messadapter) gemäß der dritten erfindungsgemäßen Ausführung in einer Spannstellung,
- FIG 7: eine Ansicht der Spannvorrichtung (Auswucht- oder Messadapter) gemäß der dritten erfindungsgemäßen Ausführung in einer Anschlagstellung (max. Spannweg);
- FIG 8: Spannzungen bzw. eine Spannzange mit Betätigungselement und Führungsplatte für die Spannzungen bzw. die Spannzange bei der Spannvorrichtung nach der dritten erfindungsgemäßen Ausführung.

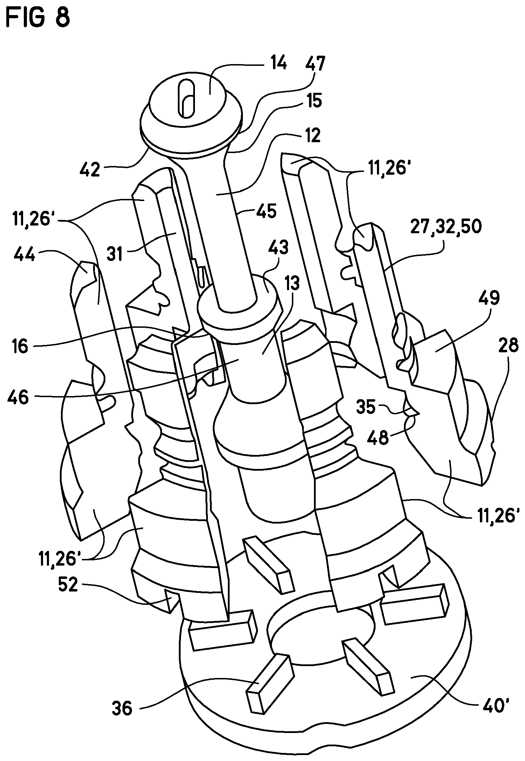

FIGen 1 bis 2, FIGen 3 bis 4 sowie FIGen 5 bis 7 und FIG 8 zeigen jeweils einen ersten bzw. zweiten bzw. dritten Auswucht- oder Messadapter 1.

Die gezeigten Auswucht- oder Messadapter 1 sind zum Spannen eines rotierenden Bauteils 2 an einer Auswucht- oder Messmaschine 60 (nicht gezeigt) konzipiert.

Bei derartigen Maschinen ist eine zentrische Aufnahme des auszuwuchtenden oder zu messenden Bauteils 2 mit hoher Rundlauf- und Wiederholgenauigkeit von besonderer Bedeutung. Bei dem Bauteil 2 kann es sich z.B. um eine Werkzeugaufnahme für ein Bohr-, Fräs- oder Schleifwerkzeug, einen Rotor oder ein anderes auszuwuchtendes oder zu vermessendes Maschinenteil handeln.

### - Auswucht- oder Messadapter 1 (erste Ausführung, FIGen 1 bis 2)

Der Auswucht- oder Messadapter 1 enthält, wie insbesondere hier die FIGen 1 und 2 zeigen, einen z.B. in die Antriebsspindel der Auswucht- oder Messmaschine 60 (nicht gezeigt) einsetzbaren Grundkörper 4, 5, 5' der bei der gezeigten Ausführung aus einem mit einem Auflageflansch 3 versehenen und eine Aufnahmeöffnung 6 aufweisenden Oberteil 4, einem mit diesem verschraubten und einen im Wesentlichen hohlzylindrischen Durchgangsbereich 8 aufweisenden Mittelteil 5' und einem mit diesem verschraubten, im Wesentlichen hohlzylindrischen Unterteil 5 besteht.

Über den Auflageflansch 3 kann der Grundkörper 4, 5, 5' z.B. an der Oberseite der Antriebsspindel (nicht gezeigt) befestigt werden.

Das Oberteil 4 weist - in seiner Aufnahmeöffnung 6 - einen konischen Aufnahmebereich für einen konischen Schaft 7 des zu spannenden Bauteils 2 auf. Der Schaft 7 des zu spannenden Bauteils 2 ist konisch ausgebildet und kann einen polygonalen, kreisrunden oder sonstigen geeigneten Querschnitt aufweisen. Entsprechend ist auch die Aufnahmeöffnung 6 des Oberteils 4 konisch und weist eine an den Querschnitt des Schafts 7 angepasste Innenkontur auf.

Im Bereich des konischen Schaftendes des Bauteils 2 ist eine im Wesentlichen zylindrische axiale Ausnehmung 18 mit einer inneren Spannfläche 33 bzw. - genauer und hier - einem Innengewinde 33 vorgesehen, über welche das Bauteil 2 - mittels des Wuchtadapters 1 (im Formschluss) gespannt bzw. gehalten werden kann.

In der Aufnahmeöffnung 6 des Oberteils 4 ist, wie die FIGen 1 und 2 auch zeigen, eine Lagerbuchse 10 eingesetzt, deren Innenkontur auch an den Querschnitt des Schaftes 7 des zu spanenden Bauteils 2 angepasst ist - und das Einsetzen des Bauteils 2 erleichtert.

In dem aus dem Oberteil 4, dem Mittelteil 5' und dem Unterteil 5 zusammengesetzten Grundkörper sind außerdem eine Spannzange 11 und ein zu dieser koaxiales Betätigungselement 12 zur Betätigung der Spannzange 11 untergebracht.

Das Betätigungselement 12 enthält einen unteren stangenförmigen Führungsbereich 13 und einen oberen Betätigungskopf 14 mit einer ersten äußeren Konusfläche 15 im oberen Teil und eine zweiten äußere Konusfläche 16 im unteren Teil.

Der Betätigungskopf 14 des Betätigungselements 12 greift mit seinem oberen Teil in die - die innere Spannfläche 33 bzw. das Innengewinde 33 aufweisende - axiale Aufnahmeöffnung/Vertiefung 18 im Schaft 7 des zu spannenden Bauteils 2 ein.

Durch den stangenförmigen Führungsbereich 13 ist das Betätigungselement 12 über eine mit Wälzkörpern versehene Lagerhülse 19 axial verschiebbar in dem Unterteil 5 des Grundkörpers geführt. Die Lagerhülse 19 ist in eine zentrische Durchgangsbohrung 20 im Unterteil 5 eingesetzt. Die Wälzkörper können unter radialer Vorspannung stehen, so dass eine spielfreie Führung entsteht.

An dem gegenüber dem Unterteil 5 nach unten vorstehenden Ende des stangenförmigen Führungsbereichs 13 ist ein Kolben 21 befestigt.

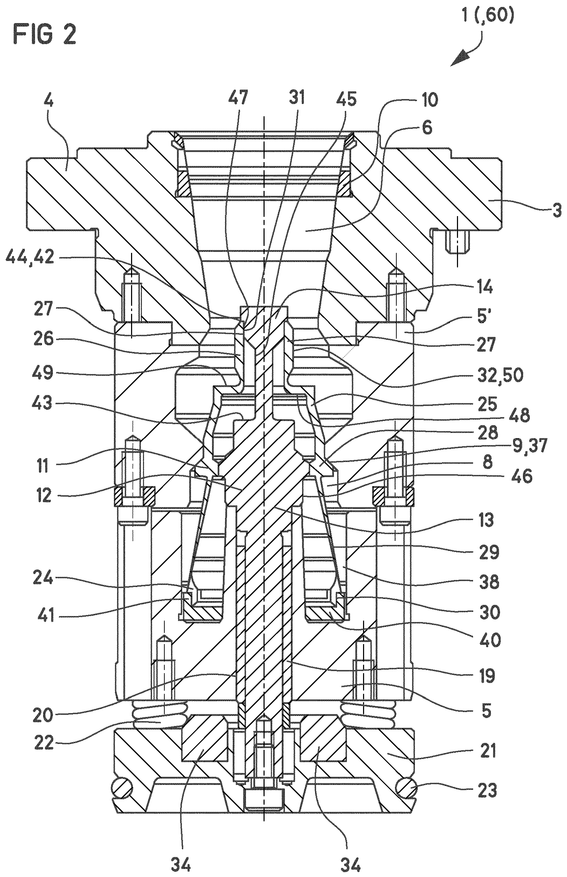

Zwischen dem Kolben 21 und dem Unterteil 5 sind in Figur2 angedeutete Druckfedern 22 eingespannt. Die Druckfedern 22 sind zur stabilen Halterung in erkennbare Sacklöcher 17 im Unterteil 5 und im Kolben 21 eingesetzt.

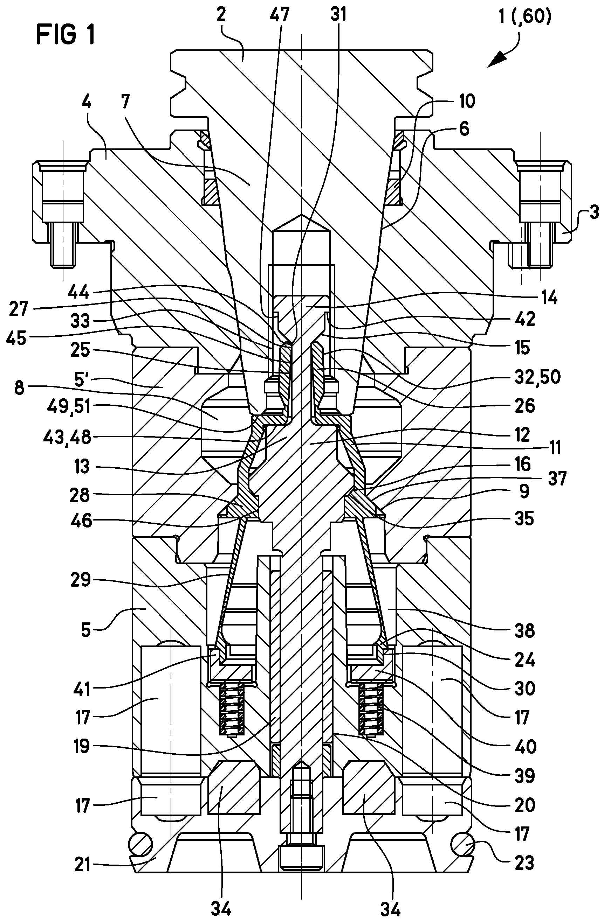

Wie die Figuren 1 und 2 auch weiter zeigen, sind zwischen dem Kolben 21 und dem Unterteil 5 ferner auch Dämpfergummi 34 eingebracht.

Durch diese Druckfedern 22 wird die Spannzange 11 (über das Betätigungselement 12) in ihre Spannstellung (dort das zu spannende Bauteil 2 haltend) gedrückt. Durch Verschiebung des Kolbens 21 entgegen der Kraft der Druckfedern 22 kann die Spannzange 11 (über das Betätigungselement 12) "gelöst" werden (Lösestellung).

Hierzu kann der Kolben 21 über eine radiale Dichtung 23 abgedichtet in der Antriebsspindel der Auswucht- oder Messmaschine axial verschiebbar angeordnet sein und von der Unterseite mit Druckluft beaufschlagt werden.

Die Spannzange 11 weist einen hülsenförmigen Sockel 24 und mehrere in Umfangsrichtung durch axiale Schlitze 25 voneinander getrennte, radial federnde Spannzungen 26 mit einem dem zu spannenden Bauteil 2 zugeordneten vorderen Spannbereich 27 und einem dem Grundkörper zugeordneten hinteren Spannbereich 28 auf. In den beiden Spannbereichen 27 und 28 sind die Spannzungen 26 verdickt ausgeführt.

In dem hülsenförmigen Sockel 24 der Spannzange 11 sind ebenfalls zu den vorderen Schlitzen 25 axial ausgerichtete hintere Schlitze 29 vorgesehen, die zu den vorderen Schlitzen 25 hin offen und zum hinteren Ende der Sockels 24 hin geschlossen sind. Im Bereich dieser hinteren Schlitze 29 sind die Spannzungen 26 äußerst dünn (und nachgiebig bzw. elastisch) ausgebildet.

An dem hinteren Ende des Sockels 24 der Spannzange 11 ist eine außenseitige Ringnut 30 eingearbeitet.

Die dem zu spannenden Bauteil 2 zugewandten vorderen Spannbereiche 27 der Spannzungen 26 weisen erste innere zylindrische Anlage-Spannflächen 31 zur Anlage an bzw. zum Eingriff mit der erste äußere Konusfläche 15 am Betätigungskopf 14 des Betätigungselements 12 auf.

An den vorderen Spannbereichen 27 sind außerdem erste äußere Spannflächen 32 - mit Formschlusselementen 50 - hier in Form von Außengewindesegmenten 50 - zur Anlage an der inneren Spannfläche 33, d.h. an dem Innengewinde 33, an der Innenseite der axialen Aufnahmeöffnung 18 im Schaft 7 des zu spannenden Bauteils 2 vorgesehen.

An der Innenseite der hinteren Spannbereiche 28 der Spannzungen 26 befindet sich eine konische zweite Spannfläche 35 zur Anlage bzw. zum Eingriff an/mit der zweiten Konusfläche 16 des Betätigungselements 12.

An der Außenseite der hinteren Spannbereiche 28 der Spannzungen 26 ist eine konische Anlagefläche 37 zur Anlage an der konischen inneren Spannfläche 9 an der Innenseite des Oberteils 4 des Grundkörpers 4, 5, 5' vorgesehen.

Die Spannzange 11 ist über den ringförmigen Sockel 24 in einer entsprechenden Vertiefung 38 des Unterteils 5 des Grundkörpers 4, 5, 5' eingesetzt und steht mit ihrem unteren Ende auf einer durch Druckfedern 39 nach oben beaufschlagten Druckscheibe 40 auf.

In der Ringnut 30 am unteren Ende der Spannzange 11 ist ein Lagerring 41 mit mehreren innerhalb eines Käfigs angeordneten Wälzkörpern zur Führung der Spannzange 11 innerhalb der Vertiefung 38 angeordnet. Auch diese Wälzkörper können unter radialer Vorspannung stehen und somit eine spielfreie Führung erzielen.

Im Folgenden wird die Funktionsweise des vorstehend beschriebenen Auswucht- oder Messadapters 1 erläutert (Anm.: FIG 1 zeigt den Wuchtadapter 1 in seiner Lösestellung; FIG 2 zeigt den Wuchtadapter 1 in seiner Spannstellung):
Über den z.B. durch Druckluft oder ein anderes Druckfluid beaufschlagten Kolben 21 ist das Betätigungselement 12 (in der Lösestellung FIG 1) nach oben gedrückt.

In der gezeigten Lösestellung (FIG 1) liegen dabei die federnden Spannzungen 26 der Spannzange 11 mit ihrer Innenseite im Bereich des vorderen Spannbereichs 27 an einem ersten zylindrischen Bereich 45 des Betätigungskopfs 14 unterhalb der ersten Konusfläche 15 und im Bereich des hinteren Spannbereichs 28 an einem zweiten zylindrischen Bereich 46 unterhalb der zweiten Konusfläche 16 an.

Der Betätigungskopf 14 weist im ersten zylindrischen Bereich 45 einen geringeren Durchmesser als in einem dritten zylindrischen Bereich 47 oberhalb der ersten Konusfläche 15 auf. Dadurch sind die vorderen Spannbereiche 27 der Spannzange 11 radial nach innen gekippt und geben das zu spannende Bauteil 2 zur Entnahme bzw. zum Einsetzen in den Auswuchtadapter 1 frei. D.h., hier erfolgt kein - formschlüssiger - Eingriff der Formschlusselemente 50 der Spannzungen 26 in das Innengewinde 33 an der Innenseite der axialen Aufnahmeöffnung 18 im Schaft 7 des zu spannenden Bauteils 2.

Wenn die von unten auf den Kolben 21 wirkende Kraft nachlässt, wird das Betätigungselement 12 über die zwischen dem Unterteil 5 und dem Kolben 21 eingespannten Druckfedern 22 nach unten verschoben.

Dadurch gleiten die in die axiale Aufnahmeöffnung/Vertiefung 18 des zu spannenden Bauteils 2 eingreifenden vorderen Spannbereiche 27 am freien vorderen Ende der federnden Spannzungen 26 der Spannzange 11 mit ihren inneren - ggfl. angefasten - zylindrischen Anlageflächen 31 an der ersten Konusfläche 15 des Betätigungskopfs 14 entlang, wodurch die vorderen Enden der federnden Spannzungen 26 mit ihren Außengewindesegmenten 50 radial nach außen in das Innengewinde 33 in der axialen Aufnahmeöffnung 18 des zu spannenden Bauteils 2 gedrückt werden.

In einer ersten Spannphase werden ausschließlich die vorderen Spannbereiche 27 an den vorderen freien Enden der federnden Spannzungen 26 radial nach außen gedrückt, bis die zweite Konusfläche 16 des Betätigungskopfs 14 zur Anlage an den konischen Spannflächen 35 der Spannzange 11 gelangt.

Mit zunehmender Axialverschiebung des Betätigungselements 12 werden dann auch die hinteren Spannbereiche 28 in einer zweiten Spannphase radial nach außen gedrückt und die Spannzange 11 führt durch die Anlage der konische Anlagefläche 37 an der konischen inneren Spannfläche 9 des Oberteils 4 auch eine Axialbewegung entgegen der Kraft der Druckfedern 39 aus.

Sobald die ersten inneren Spannflächen 31 der Spannzungen 26 über die erste Konusfläche 15 des Kopfes 14 des Betätigungselementes 12 hinausgleiten und den dritten zylindrischen Bereich des Kopfes 14 des Betätigungselementes 12 erreichen, kommt die radiale Bewegung der ersten äußeren Spannflächen 32 der Spannzungen 26 in einer definierten radialen Position zum Erliegen. In dieser Stellung bilden die Außen-Gewindesegmente 50 an den Spannzungen 11 ein zwar unterbrochenes, aber fortlaufendes Gewinde, das in das Innengewinde 33 ragt, jedoch ohne sich mit diesem radial zu verspannen.

Gelangt dann weiter mit zunehmender Axialverschiebung des Betätigungselements 12 eine erste Mitnehmerfläche 42 des Betätigungselements 12 in eine Anlage mit einer ersten Anlagefläche 44 an der Spannzange 11 bzw. an den Stirnseiten der Spannzungen 26 wird - in einer dritten und letzten Spannphase - die Spannzange 11 innerhalb des Grundköpers 4, 5, 5' axial entgegen der Kraft der Druckfedern 39 bis zu ihrem maximalen Einzug eingezogen.

Durch Druckbeaufschlagung des Kolbens 21 - und wirkender Druckkraft der Druckfedern 39 - kann der Lösevorgang in umgekehrter Weise erfolgen, wobei dann hier am Ende des Lösevorgangs zunächst eine zweite Mitnehmerfläche 43 des Betätigungselements 12 in eine Anlage mit einer zweiten Anlagefläche 48 an der Spannzange 11 gelangt, dadurch die Spannzange 11 (mit dem Betätigungselement 12) axial "nach oben" mitgenommen wird - und letztlich dann die Spannzange 11 in der Endphase des Lösehubs mit ihrer dritten Mitnahmefläche 49 zur Anlage an dem zu spannenden Bauteil 2 - bzw. genauer - an einer dritten Anlagefläche 51 an dem zu spannenden Bauteil 2 bzw. an dessen unterer Stirnseite kommt - und dieses aus der Aufnahmeöffnung 6 des Grundkörpers 4, 5, 5' drückt.

Dadurch kann das - jetzt "entspannte" bzw. gelöste - Bauteil 2 einfach entnommen werden.

### - Auswucht- oder Messadapter 1 (zweite Ausführung, FIGen 3 bis 4)

Der Auswucht- oder Messadapter 1 nach dieser weiteren Ausführungsform enthält, wie insbesondere hier die FIGen 3 und 4 zeigen, auch hier einen z.B. in die Antriebsspindel der Auswucht- oder Messmaschine 60 (nicht gezeigt) einsetzbaren Grundkörper 4, 5, 5', der bei der gezeigten Ausführung hier ebenfalls aus einem mit einem Auflageflansch 3 versehenen und eine Aufnahmeöffnung 6 aufweisenden Oberteil 4, einem mit diesem verschraubten und einen im Wesentlichen hohlzylindrischen Durchgangsbereich 8 aufweisenden Mittelteil 5' und einem mit diesem verschraubten, im Wesentlichen hohlzylindrischen Unterteil 5 besteht.

Über den Auflageflansch 3 kann der Grundkörper 4, 5, 5' z.B. an der Oberseite der Antriebsspindel (nicht gezeigt) befestigt werden.

Das Oberteil 4 weist - in seiner Aufnahmeöffnung 6 - einen konischen Aufnahmebereich für einen konischen Schaft 7 des zu spannenden Bauteils 2 auf. Der Schaft 7 des zu spannenden Bauteils 2 ist konisch ausgebildet und kann einen polygonalen, kreisrunden oder sonstigen geeigneten Querschnitt aufweisen. Entsprechend ist auch die Aufnahmeöffnung 6 des Oberteils 4 konisch und weist eine an den Querschnitt des Schafts 7 angepasste Innenkontur auf.

Im Bereich des konischen Schaftendes des Bauteils 2 ist eine im Wesentlichen zylindrische axiale Ausnehmung 18 mit einer inneren Spannfläche 33 bzw. - genauer und hier - einem Innengewinde 33 vorgesehen, über welche das Bauteil 2 - mittels des Wuchtadapters 1 (im Formschluss) gespannt bzw. gehalten werden kann.

In der Aufnahmeöffnung 6 des Oberteils 4 ist, wie die FIGen 3 und 4 auch zeigen, eine Lagerbuchse 10 eingesetzt, deren Innenkontur auch an den Querschnitt des Schaftes 7 des zu spanenden Bauteils 2 angepasst ist - und das Einsetzen des Bauteils 2 erleichtert.

In dem aus dem Oberteil 4, dem Mittelteil 5' und dem Unterteil 5 zusammengesetzten Grundkörper sind außerdem eine Spannzange 11 und ein zu dieser koaxiales Betätigungselement 12 zur Betätigung der Spannzange 11 untergebracht.

Das Betätigungselement 12 enthält einen unteren stangenförmigen Führungsbereich 13 und einen oberen Betätigungskopf 14 - mit einer ersten äußeren Konusfläche 15 im oberen Teil und eine zweiten äußere Konusfläche 16 im unteren Teil.

Der Betätigungskopf 14 des Betätigungselements 12 greift mit seinem oberen Teil in die - die innere Spannfläche 33 bzw. das Innengewinde 33 aufweisende - axiale Aufnahmeöffnung/Vertiefung 18 im Schaft 7 des zu spannenden Bauteils 2 ein.

Durch den stangenförmigen Führungsbereich 13 ist das Betätigungselement 12 über eine mit Wälzkörpern versehene Lagerhülse 19 axial verschiebbar in dem Unterteil 5 des Grundkörpers geführt. Die Lagerhülse 19 ist in eine zentrische Durchgangsbohrung 20 im Unterteil 5 eingesetzt. Die Wälzkörper können unter radialer Vorspannung stehen, so dass eine spielfreie Führung entsteht.

An dem gegenüber dem Unterteil 5 nach unten vorstehenden Ende des stangenförmigen Führungsbereichs 13 des Betätigungselements 12 ist ein Kolben 21 befestigt.

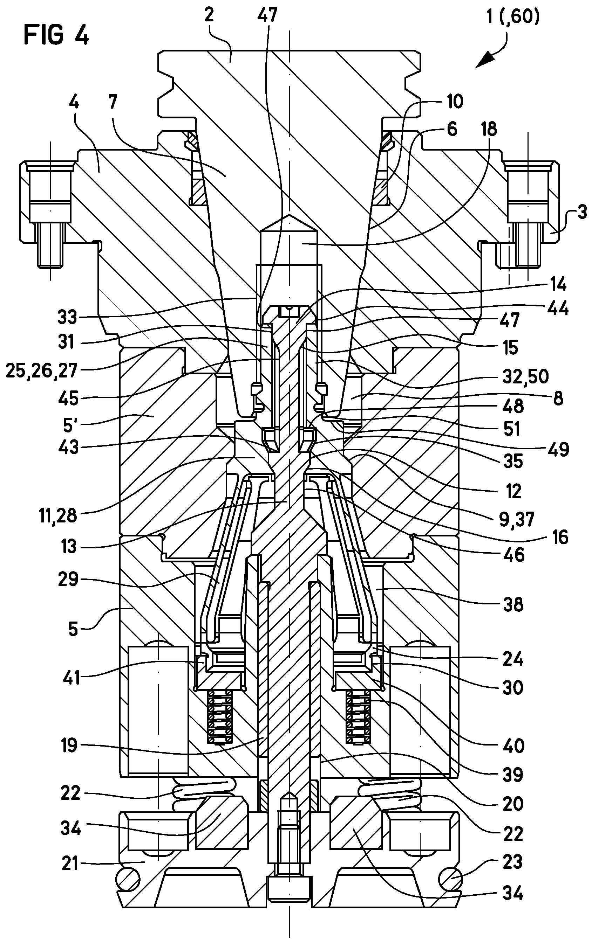

Zwischen dem Kolben 21 und dem Unterteil 5 sind in Figur 4 angedeutete Druckfedern 22 eingespannt. Die Druckfedern 22 sind zur stabilen Halterung in erkennbare Sacklöcher 17 im Unterteil 5 und im Kolben 21 eingesetzt.

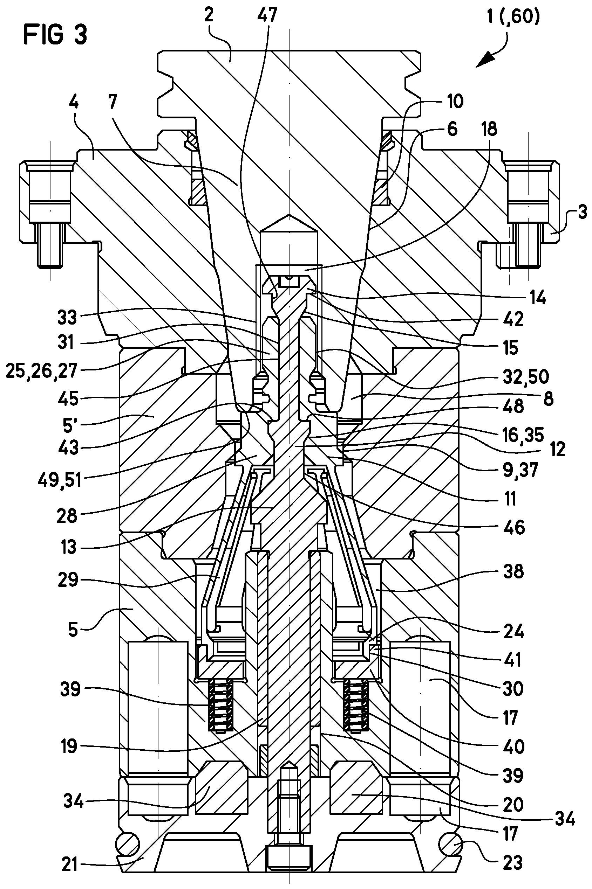

Durch diese Druckfedern 22 wird die Spannzange 11 (über das Betätigungselement 12) in ihre Spannstellung (dort das zu spannende Bauteil 2 haltend) gedrückt (vgl. FIG 4). Durch Verschiebung des Kolbens 21 entgegen der Kraft der Druckfedern 22 kann die Spannzange 11 (über das Betätigungselement 12) aus ihrer Spannstellung "gelöst" und in die Lösestellung verschoben werden (Lösestellung) (vgl. FIG 3).

Hierzu kann der Kolben 21 über eine radiale Dichtung 23 abgedichtet in der Antriebsspindel der Auswucht- oder Messmaschine axial verschiebbar angeordnet sein - und von der Unterseite mit Druckluft beaufschlagt werden.

Die Spannzange 11 weist einen hülsenförmigen Sockel 24 und mehrere in Umfangsrichtung durch axiale Schlitze 25 voneinander getrennte, radial federnde Spannzungen 26 mit einem dem zu spannenden Bauteil 2 zugeordneten vorderen Spannbereich 27 und einem dem Grundkörper zugeordneten hinteren Spannbereich 28 auf. In den beiden Spannbereichen 27 und 28 sind die Spannzungen 26 verdickt ausgebildet.

In dem hülsenförmigen Sockel 24 der Spannzange 11 sind ebenfalls zu den vorderen Schlitzen 25 axial ausgerichtete hintere Schlitze 29 vorgesehen, die zu den vorderen Schlitzen 25 hin offen und zum hinteren Ende der Sockels 24 hin geschlossen sind. Im Bereich dieser hinteren Schlitze 29 sind die Spannzungen 26 äußerst dünn (und nachgiebig bzw. elastisch) ausgebildet.

An dem hinteren Ende des Sockels 24 der Spannzange 11 ist eine außenseitige Ringnut 30 eingearbeitet.

Die dem zu spannenden Bauteil 2 zugewandten vorderen Spannbereiche 27 der Spannzungen 26 weisen erste innere zylindrische Anlage-Spannflächen 31 zur Anlage an bzw. zum Eingriff mit der erste äußere Konusfläche 15 am Betätigungskopf 14 des Betätigungselements 12 auf.

An den vorderen Spannbereichen 27 sind außerdem erste äußere Spannflächen 32 - mit Formschlusselementen 50 - hier in Form von Außengewindesegmenten 50 - zur Anlage an der inneren Spannfläche 33, d.h. an dem Innengewinde 33, an der Innenseite der axialen Aufnahmeöffnung 18 im Schaft 7 des zu spannenden Bauteils 2 vorgesehen.

An der Innenseite der hinteren Spannbereiche 28 der Spannzungen 26 befindet sich eine konische zweite Spannfläche 35 zur Anlage bzw. zum Eingriff an/mit der zweiten Konusfläche 16 des Betätigungselements 12.

An der Außenseite der hinteren Spannbereiche 28 der Spannzungen 26 ist außerdem eine konische Anlagefläche 37 zur Anlage an der konischen inneren Spannfläche 9 an der Innenseite des Oberteils 4 des Grundkörpers 4, 5, 5' vorgesehen.

Die Spannzange 11 ist über den ringförmigen Sockel 24 in einer entsprechenden Vertiefung 38 des Unterteils 5 des Grundkörpers 4, 5, 5' eingesetzt und steht mit ihrem unteren Ende auf einer durch Druckfedern 39 nach oben beaufschlagten Druckscheibe 40 auf.

In der Ringnut 30 am unteren Ende der Spannzange 11 ist ein Lagerring 41 mit mehreren innerhalb eines Käfigs angeordneten Wälzkörpern zur Führung der Spannzange 11 innerhalb der Vertiefung 38 angeordnet. Auch diese Wälzkörper können unter radialer Vorspannung stehen und somit eine spielfreie Führung erzielen.

Im Folgenden wird die Funktionsweise des vorstehend beschriebenen Auswucht- oder Messadapters 1 erläutert (Anm.: FIG 3 zeigt den Wuchtadapter 1 in seiner Lösestellung; FIG 4 zeigt den Wuchtadapter 1 in seiner Spannstellung):
Über den z.B. durch Druckluft oder ein anderes Druckfluid beaufschlagten Kolben 21 ist das Betätigungselement 12 (in der Lösestellung in FIG 3) - entgegen der Druckfedern 22 - nach oben gedrückt.

In der gezeigten Lösestellung (FIG 3) liegen dabei die federnden Spannzungen 26 der Spannzange 11 mit ihrer Innenseite im Bereich des vorderen Spannbereichs 27 an einem ersten zylindrischen Bereich 45 des Betätigungskopfs 14 unterhalb der ersten Konusfläche 15 und im Bereich des hinteren Spannbereichs 28 an einem zweiten zylindrischen Bereich 46 unterhalb der zweiten Konusfläche 16 des Betätigungselements 12 an.

Der Betätigungskopf 14 weist im ersten zylindrischen Bereich 45 einen geringeren Durchmesser als in einem dritten zylindrischen Bereich 47 oberhalb der ersten Konusfläche 15 auf. Dadurch sind die vorderen Spannbereiche 27 der Spannzange 11 radial nach innen gekippt und geben das zu spannende Bauteil 2 zur Entnahme bzw. zum Einsetzen in den Auswuchtadapter 1 frei. D.h., hier erfolgt kein - formschlüssiger - Eingriff der Formschlusselemente 50 der Spannzungen 26 in das Innengewinde 33 an der Innenseite der axialen Aufnahmeöffnung 18 im Schaft 7 des zu spannenden Bauteils 2.

Wenn die von unten auf den Kolben 21 wirkende Kraft nachlässt, wird das Betätigungselement 12 über die zwischen dem Unterteil 5 und dem Kolben 21 eingespannten Druckfedern 22 axial nach unten verschoben.

Dadurch gleiten die in die axiale Aufnahmeöffnung /Vertiefung 18 des zu spannenden Bauteils 2 eingreifenden vorderen Spannbereiche 27 am freien vorderen Ende der federnden Spannzungen 26 der Spannzange 11 mit ihren inneren - ggfl. angefasten - zylindrischen Anlageflächen 31 an der ersten Konusfläche 15 des Betätigungskopfs 14 entlang, wodurch die vorderen Enden der federnden Spannzungen 26 im vorderen Spannbereich 27 mit ihren Außengewindesegmenten 50 radial nach außen in das Innengewinde 33 in der axialen Aufnahmeöffnung 18 des zu spannenden Bauteils 2 gedrückt werden.

Sobald die ersten inneren Spannflächen 31 der Spannzungen 26 über die erste Konusfläche 15 des Kopfes 14 des Betätigungselementes 12 hinausgleiten und den dritten zylindrischen Bereich des Kopfes 14 des Betätigungselementes 12 erreichen, kommt die radiale Bewegung der ersten äußeren Spannflächen 32 der Spannzungen 26 in einer definierten radialen Position zum Erliegen. In dieser Stellung bilden die Außen-Gewindesegmente 50 an den Spannzungen 11 ein zwar unterbrochenes, aber fortlaufendes Gewinde, das in das Innengewinde 33 ragt, jedoch ohne sich mit diesem radial zu verspannen.

Gleichzeitig - bei dieser axialen "nach Unten-Bewegung" des Betätigungselements 12 - gleiten auch die inneren konischen Spannflächen 35 der Spannzungen 26 an der zweiten Konusfläche 16 des Betätigungselements 12 entlang, wodurch auch die hinteren Spannbereiche 28 der Spannzungen 26 radial nach außen gedrückt werden.

Da dabei aber auch die konischen Anlageflächen 37 der Spannzange 11 mit der konischen inneren Spannfläche 9 des Oberteils 4 in Eingriff kommen bzw. diese aneinander entlanggleiten, führt auch die Spannzange 11 eine Axialbewegung - entgegen der Kraft der Druckfedern 39 aus.

Gelangt dann weiter mit zunehmender Axialverschiebung des Betätigungselements 12 eine erste Mitnehmerfläche 42 des Betätigungselements 12 in eine Anlage mit einer ersten Anlagefläche 44 an der Spannzange 11 bzw. an den Stirnseiten der Spannzungen 26 (vgl. FIG 4), wird die Spannzange 11 innerhalb des Grundköpers 4, 5, 5' axial entgegen der Kraft der Druckfedern 39 bis zu ihrem maximalen Einzug eingezogen.

Durch Druckbeaufschlagung des Kolbens 21 - und wirkender Druckkraft der Druckfedern 39 - kann der Lösevorgang in umgekehrter Weise erfolgen, wobei dann hier am Ende des Lösevorgangs zunächst eine zweite Mitnehmerfläche 43 des Betätigungselements 12 in eine Anlage mit einer zweiten Anlagefläche 48 an der Spannzange 11 gelangt, dadurch die Spannzange 11 axial nach oben mitgenommen wird - und letztlich dann die Spannzange 11 in der Endphase des Lösehubs mit ihrer dritten Mitnahmefläche 49 zur Anlage an dem zu spannenden Bauteil 2 - bzw. genauer - an einer dritten Anlagefläche 51 an dem zu spannenden Bauteil 2 bzw. an dessen unterer Stirnseite kommt - und dieses aus der Aufnahmeöffnung 6 des Grundkörpers 4, 5, 5' drückt.

Dadurch kann das - jetzt "entspannte" bzw. gelöste - Bauteil 2 einfach entnommen werden.

### - Auswucht- oder Messadapter 1 (dritte Ausführung, FIGen 5 bis 7 und FIG 8)

Der Auswucht- oder Messadapter 1 nach dieser weiteren Ausführungsform enthält, wie insbesondere hier die FIGen 5 bis 7 zeigen, auch hier einen z.B. in die Antriebsspindel der Auswucht- oder Messmaschine 60 (nicht gezeigt) einsetzbaren Grundkörper 4, 5, der bei der gezeigten Ausführung - in diesem Fall - aus einem mit einem Auflageflansch 3 versehenen und eine Aufnahmeöffnung 6 aufweisenden Oberteil 4 und einem mit diesem verschraubten, im Wesentlichen hohlzylindrischen Unterteil 5 besteht.

Über den Auflageflansch 3 kann der Grundkörper 4, 5 z.B. an der Oberseite der Antriebsspindel (nicht gezeigt) befestigt werden.

Das Oberteil 4 weist - in seiner Aufnahmeöffnung 6 - einen konischen Aufnahmebereich für einen konischen Schaft 7 des zu spannenden Bauteils 2 auf. Der Schaft 7 des zu spannenden Bauteils 2 ist konisch ausgebildet und kann einen polygonalen, kreisrunden oder sonstigen geeigneten Querschnitt aufweisen. Entsprechend ist auch die Aufnahmeöffnung 6 des Oberteils 4 konisch und weist eine an den Querschnitt des Schafts 7 angepasste Innenkontur auf.

Im Bereich des konischen Schaftendes des Bauteils 2 ist eine im Wesentlichen zylindrische axiale Ausnehmung 18 mit einer inneren Spannfläche 33 bzw. - genauer und hier - einem Innengewinde 33 vorgesehen, über welche das Bauteil 2 - mittels des Wuchtadapters 1 (im Formschluss) gespannt bzw. gehalten werden kann.

In der Aufnahmeöffnung 6 des Oberteils 4 ist, wie die FIGen 5 bis 7 auch zeigen, eine Lagerbuchse 10 eingesetzt, deren Innenkontur auch an den Querschnitt des Schaftes 7 des zu spanenden Bauteils 2 angepasst ist - und das Einsetzen des Bauteils 2 erleichtert.

In dem aus dem Oberteil 4 und dem Unterteil 5 zusammengesetzten Grundkörper sind außerdem eine Spannzange 11 und ein zu dieser koaxiales Betätigungselement 12 zur Betätigung der Spannzange 11 untergebracht (vgl. FIGen 5 bis 7 und insbesondere FIG 8).

Das Betätigungselement 12 enthält einen unteren stangenförmigen Führungsbereich 13 und einen oberen Betätigungskopf 14 mit einer ersten äußeren Konusfläche 15 im oberen Teil und eine zweiten äußere Konusfläche 16 im unteren Teil.

Der Betätigungskopf 14 des Betätigungselements 12 greift mit seinem oberen Teil in die - die innere Spannfläche 33 bzw. das Innengewinde 33 aufweisende - axiale Aufnahmeöffnung/Vertiefung 18 im Schaft 7 des zu spannenden Bauteils 2 ein.

Durch den stangenförmigen Führungsbereich 13 ist das Betätigungselement 12 über eine Lagerhülse 19 axial verschiebbar in dem Unterteil 5 des Grundkörpers geführt. Die Lagerhülse 19 ist in eine zentrische Durchgangsbohrung 20 im Unterteil 5 eingesetzt.

An dem gegenüber dem Unterteil 5 nach unten vorstehenden Ende des stangenförmigen Führungsbereichs 13 ist ein Kolben 21 befestigt.

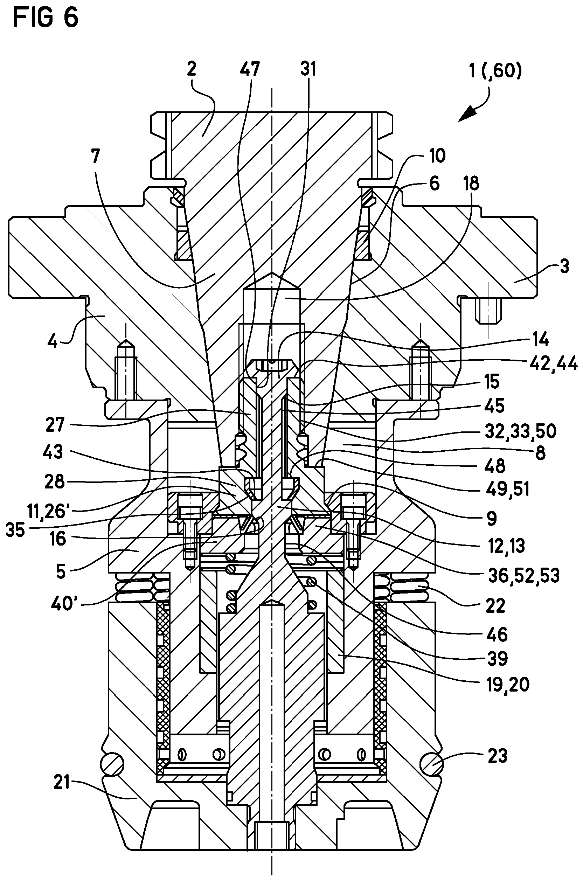

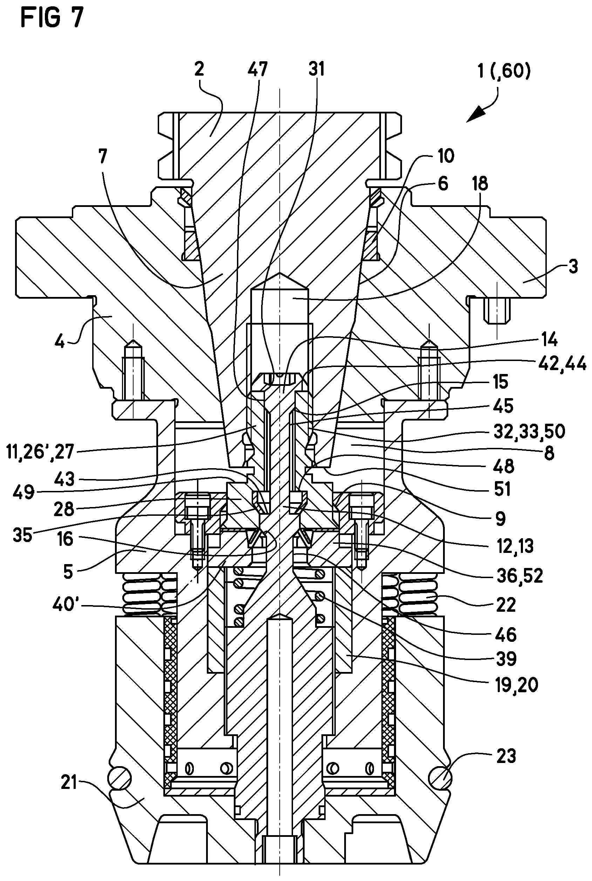

Zwischen dem Kolben 21 und dem Unterteil 5 sind in den Figuren 6 und 7 sichtbare Druckfedern 22 eingespannt. Die Druckfedern 22 sind zur stabilen Halterung in nicht erkennbare Sacklöcher 17 im Unterteil 5 und im Kolben 21 eingesetzt.

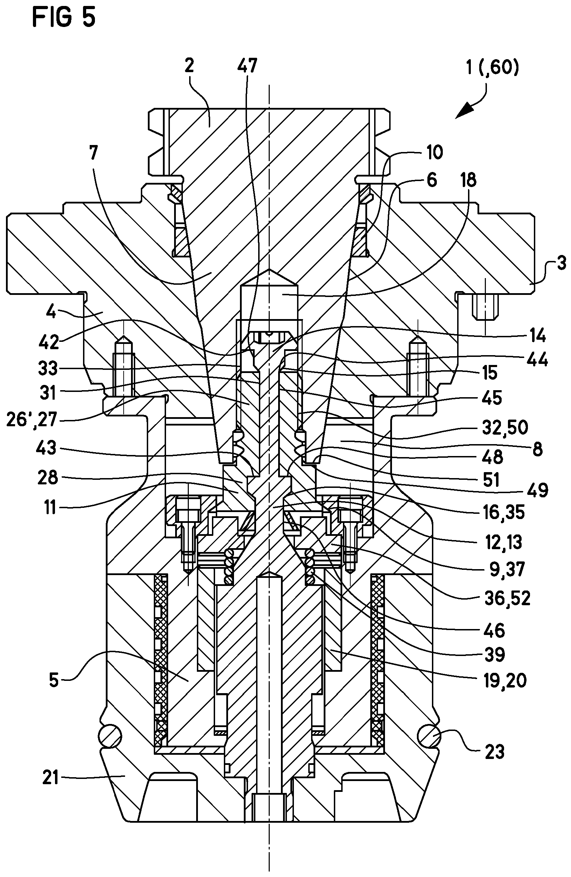

Durch diese Druckfedern 22 wird die Spannzange 11 (über das Betätigungselement 12) in ihre Spannstellung (dort das zu spannende Bauteil 2 haltend) gedrückt (vgl. FIG 6 ("komplett gespannt") und FIG 7 ("max. Spannweg")). Durch Verschiebung des Kolbens 21 entgegen der Kraft der Druckfedern 22 kann die Spannzange 11 (über das Betätigungselement 12) aus ihrer Spannstellung "gelöst" werden (Lösestellung) (vgl. FIG 5).

Hierzu kann der Kolben 21 über eine radiale Dichtung 23 abgedichtet in der Antriebsspindel der Auswucht- oder Messmaschine axial verschiebbar angeordnet sein und von der Unterseite mit Druckluft beaufschlagt werden.

Die Spannzange 11 sieht, wie insbesondere auch FIG 8 zeigt, mehrere in Umfangsrichtung getrennte separate Spannzungen 26' mit einem dem zu spannenden Bauteil 2 zugeordneten vorderen Spannbereich 27 und einem dem Grundkörper zugeordneten hinteren Spannbereich 28 vor.

Die dem zu spannenden Bauteil 2 zugewandten vorderen Spannbereiche 27 der Spannzungen 26' weisen erste innere zylindrische Anlage-Spannflächen 31 zur Anlage an bzw. zum Eingriff mit der erste äußere Konusfläche 15 am Betätigungskopf 14 des Betätigungselements 12 auf.

An den vorderen Spannbereichen 27 sind außerdem erste äußere Spannflächen 32 - mit Formschlusselementen 50 - hier in Form von Außengewindesegmenten 50 - zur Anlage an der inneren Spannfläche 33, d.h. an dem Innengewinde 33, an der Innenseite der axialen Aufnahmeöffnung 18 im Schaft 7 des zu spannenden Bauteils 2 vorgesehen.

An der Innenseite der hinteren Spannbereiche 28 der Spannzungen 26' befindet sich eine konische zweite Spannfläche 35 zur Anlage bzw. zum Eingriff an/mit der zweiten Konusfläche 16 des Betätigungselements 12.

An der Außenseite der hinteren Spannbereiche 28 der Spannzungen 26 ist außerdem eine konische Anlagefläche 37 zur Anlage an der konischen inneren Spannfläche 9 an der Innenseite des Oberteils 4 des Grundkörpers 4, 5 vorgesehen.

Die separaten Spannzungen 26' der Spannzange 11 sind - kreisförmig um das Betätigungselement 12 angeordnet - auf einer Führungsplatte 40' gehalten bzw. angeordnet. An ihren Unterseiten weisen die Spannzungen 26, wie FIG 8 zeigt, radial nach außen verlaufende Nuten 52 auf, in welche radiale Stege 36 auf der Führungsplatte 40' eingreifen. Durch diese Nut-Steg-Verbindung erhalten die Spannzungen 26 eine radiale Führung für eine radiale Bewegung nach außen.

Die Spannzungen 26 und die Führungsplatte 40'sind in einer entsprechenden Vertiefung 38 des Unterteils 5 des Grundkörpers 4, 5 eingesetzt, wobei die Führungsplatte 40' (und darüber so auch die Spannzungen 26) von unten durch eine Druckfedern 39 mit Druck beaufschlagt wird.

Im Folgenden wird die Funktionsweise des vorstehend beschriebenen Auswucht- oder Messadapters 1 erläutert (Anm.: FIG 5 zeigt den Wuchtadapter 1 in seiner Lösestellung ("komplett ausgestoßen"); FIG 6 zeigt den Wuchtadapter 1 in seiner Spannstellung ("komplett gespannt"); FIG 7 zeigt den Wuchtadapter 1 in Spannstellung bei maximalem Spannweg ("max. Spannweg")):
Über den z.B. durch Druckluft oder ein anderes Druckfluid beaufschlagten Kolben 21 ist das Betätigungselement 12 (in der Lösestellung FIG 3) - entgegen der Druckfedern 22 - nach oben gedrückt.

In der gezeigten Lösestellung (FIG 5) liegen dabei die Spannzungen 26 der Spannzange 11 mit ihrer Innenseite im Bereich des vorderen Spannbereichs 27 an einem ersten zylindrischen Bereich 45 des Betätigungskopfs 14 unterhalb der ersten Konusfläche 15 und im Bereich des hinteren Spannbereichs 28 an einem zweiten zylindrischen Bereich 46 unterhalb der zweiten Konusfläche 16 an.

Der Betätigungskopf 14 weist im ersten zylindrischen Bereich 45 einen geringeren Durchmesser als in einem dritten zylindrischen Bereich 47 oberhalb der ersten Konusfläche 15 auf. Dadurch sind die Spannzungen 26 der Spannzange 11 - mit ihren vorderen Spannbereichen 27 - maximal radial nach innen verschoben und geben das zu spannende Bauteil 2 zur Entnahme bzw. zum Einsetzen in den Auswuchtadapter 1 frei. D.h., hier erfolgt kein - formschlüssiger - Eingriff der Formschlusselemente 50 der Spannzungen 26 in das Innengewinde 33 an der Innenseite der axialen Aufnahmeöffnung 18 im Schaft 7 des zu spannenden Bauteils 2.

Wenn die von unten auf den Kolben 21 wirkende Kraft nachlässt, wird das Betätigungselement 12 über die zwischen dem Unterteil 5 und dem Kolben 21 eingespannten Druckfedern 22 axial nach unten verschoben.

Dadurch gleiten die in die axiale Aufnahmeöffnung/Vertiefung 18 des zu spannenden Bauteils 2 eingreifenden vorderen Spannbereiche 27 am vorderen Ende der federnden Spannzungen 26' der Spannzange 11 mit ihren inneren - ggfl. angefasten - zylindrischen Anlageflächen 31 an der ersten Konusfläche 15 des Betätigungskopfs 14 entlang, wodurch die vorderen Enden der Spannzungen 26 im vorderen Spannbereich 27 mit ihren Außengewindesegmenten 50 radial nach außen in das Innengewinde 33 in der axialen Aufnahmeöffnung 18 des zu spannenden Bauteils 2 gedrückt werden.

Sobald die ersten inneren Spannflächen 31 der Spannzungen 26' über die erste Konusfläche 15 des Kopfes 14 des Betätigungselementes 12 hinausgleiten und den dritten zylindrischen Bereich des Kopfes 14 des Betätigungselementes 12 erreichen, kommt die radiale Bewegung der ersten äußeren Spannflächen 32 der Spannzungen 26 in einer definierten radialen Position zum Erliegen. In dieser Stellung bilden die Außen-Gewindesegmente 50 an den Spannzungen 11 ein zwar unterbrochenes, aber fortlaufendes Gewinde, das in das Innengewinde 33 ragt, jedoch ohne sich mit diesem radial zu verspannen.

Gleichzeitig - bei dieser axialen "nach Unten-Bewegung" des Betätigungselements 12 - gleiten auch die äußeren konischen Spannflächen 35 der Spannzungen 26 an der zweiten Konusfläche 16 des Betätigungselements 12 entlang, wodurch auch die hinteren Spannbereiche 28 der Spannzungen 26' - geführt durch die Nut-Steg-Verbindung auf der Führungsplatte 40'- radial nach außen (bis zu ihrer kompletten Klemmlage in FIG 6) gedrückt werden.

Da dabei aber auch die konischen Anlageflächen 37 der Spannzange 11 mit der konischen inneren Spannfläche 9 des Oberteils 4 in Eingriff kommen bzw. diese aneinander entlanggleiten, führt auch die Spannzange 11 bzw. führen die Spannzungen 26' eine Axialbewegung - entgegen der Kraft der Druckfedern 39 aus.

Gelangt dann weiter mit zunehmender Axialverschiebung des Betätigungselements 12 eine erste Mitnehmerfläche 42 des Betätigungselements 12 in eine Anlage mit einer ersten Anlagefläche 44 an der Spannzange 11 bzw. an den Stirnseiten der Spannzungen 26 (vgl. FIG 7), wird die Spannzange 11 bzw. werden die Spannzungen 26' innerhalb des Grundköpers 4, 5, 5' axial entgegen der Kraft der Druckfeder 39 bis zu ihrem maximalen Einzug (in FIG 7) eingezogen.

Durch Druckbeaufschlagung des Kolbens 21 - und wirkender Druckkraft der Druckfeder 39 - kann der Lösevorgang in umgekehrter Weise erfolgen, wobei dann hier am Ende des Lösevorgangs zunächst eine zweite Mitnehmerfläche 43 des Betätigungselements 12 in eine Anlage mit einer zweiten Anlagefläche 48 an der Spannzange 11 bzw. der Spannzungen 26' gelangt, dadurch die Spannzange 11/die Spannzungen 26' axial nach oben mitgenommen wird/werden - und letztlich dann die Spannzange 11/Spannzungen 26' in der Endphase des Lösehubs mit ihren dritten Mitnahmeflächen 49 zur Anlage an dem zu spannenden Bauteil 2 - bzw. genauer - an einer dritten Anlagefläche 51 an dem zu spannenden Bauteil 2 bzw. an dessen unterer Stirnseite kommt - und dieses aus der Aufnahmeöffnung 6 des Grundkörpers 4, 5, 5' drückt.

Dadurch kann das - jetzt "entspannte" bzw. gelöste - Bauteil 2 einfach entnommen werden.

### Bezugszeichenliste:

- 1: Spannvorrichtung, Auswucht- oder Messadapter
- 2: (zu spannendes) Bauteil, Werkzeughalter, Werkstück
- 3: Flansch
- 4: Grundkörper, hohlzylindrisches Oberteil
- 5: Grundkörper, Unterteil
- 5': Grundkörper, Mittelteil
- 6: Aufnahmeöffnung (am Grundkörper 4, 5)
- 7: Schaft (des zu spannenden Bauteils 2)
- 8: Durchgangsbereich (am Grundkörper 4, 5)
- 9: innere Konusfläche (am Grundkörper 4, 5)
- 10: Lagerbuchse (am Grundkörper 4, 5 bzw. am hohlzylindrischen Oberteil 5 des Grundkörpers 4, 5)

- 11: Spannzange
- 12: Betätigungselement
- 13: unterer stangenförmiger Führungsbereich (des Betätigungselements 12)
- 14: Betätigungskopf (des Betätigungselement 12)
- 15: erste äußere Konusfläche (am Betätigungselement 12)
- 16: zweite äußere Konusfläche (am Betätigungselement 12)
- 17: Sackloch (für Druckfeder 22)
- 18: (zylindrische) axiale Aufnahmeöffnung/Ausnehmung, Vertiefung (im Schaft 7 des zu spannenden Bauteils 2)
- 19: Lagerhülse

- 20: zentrische Durchgangsbohrung (im Unterteil 5 für Lagerhülse 19)
- 21: Betätigungsvorrichtung, Kolben
- 22: Druckfeder (zwischen Unterteil 5 und Kolben 21)
- 23: Dichtung (am Kolben 21)
- 24: (hülsenförmiger) Sockel (der Spannzange 11)
- 25: (axialer, vorderer) Schlitz (in der Spannzange 11)
- 26: Spannzunge
- 26': (separate) Spannzunge
- 27: (dem zu spannenden Bauteil 2 zugeordneter) vorderer Spannbereich (an der Spannzunge 26/Spannzange 11)
- 28: (dem Grundkörper (4, 5) zugeordneter) hinteren Spannbereich (an der Spannzunge 26/Spannzange 11)
- 29: (hinterer) Schlitz (in der Spannzange)
- 30: Ringnut (am unteren Ende der Spannzange 11)

- 31: erste innere (zylindrische) Anlagefläche (an der Spannzunge 26/Spannzange 11) (zur Anlage an der ersten äußeren Konusfläche 15 des Betätigungselements 12)
- 32: erste äußere Spannfläche (mit den Formschlusselementen zur Anlage an der inneren Spannfläche 33 des zu spannenden Bauteils 2)
- 33: innere Spannfläche, (Innen-)Gewinde (am zu spannenden Bauteil 2)
- 34: Dämpfergummi
- 35: zweite Spannfläche (an der Spannzunge 26/Spannzange 11 zur Anlage/Eingriff an/mit der zweiten Konusfläche 16 am Betätigungselement 12)
- 36: Führungselement (in der Führungsplatte 40'), Steg
- 37: (äußere) konische Anlagefläche (an der Spannzunge 26/Spannzange 11 zur Anlage/Eingriff mit der innere Konusfläche 9 (am Grundkörper 4, 5))
- 38: Vertiefung (im Unterteil 5 des Grundkörpers 4, 5 zur Aufnahme des Sockels 24 der Spannzange 11)
- 39: Druckfeder (für Druckscheibe 40/Führungsplatte 40')
- 40: Druckscheibe
- 40': Führungsplatte

- 41: Lagerring (oberer Teil der Druckscheibe 40)
- 42: erste Mittnehmerfläche (am Betätigungselement 12/Betätigungskopf 14)
- 43: zweite Mittnehmerfläche (am Betätigungselement 12)
- 44: erste Anlagefläche (an der Spannzange 11 für Mitnahme beim Einzug)
- 45: erster zylindrischer Bereich (am Betätigungskopf 14/Betätigungselement 12 unterhalb der ersten Konusfläche 15)
- 46: zweiter zylindrischer Bereich (am Betätigungskopf 14/Betätigungselement 12 unterhalb der zweiten Konusfläche 16)
- 47: dritter zylindrischer Bereich (am Betätigungskopf 14/Betätigungselement 12 oberhalb der ersten Konusfläche 15)
- 48: zweite Anlagefläche (an der Spannzange 11 für Mitnahme beim Lösen)
- 49: dritte Mitnehmerfläche (an der Spannzange 11)
- 50: Formschlusselemente, (Außen-)Gewindesegment
- 51: dritte Anlagefläche (an dem zu spannenden Bauteil 2 für Auswurf)
- 52: Nut (an der Unterseite einer Spannzunge 26)

- 60: Maschinenelement, Auswucht- oder Messmaschine, Wuchtvorrichtung, Messvorrichtung, Vorrichtung zu einer Fertigung und/oder Formgebung eines Bauteils

## Patentansprüche

1. Spannvorrichtung (1), insbesondere Auswucht- oder Messadapter (1), zum Spannen eines Bauteils (2) an einem rotierenden Maschinenelement (60), insbesondere einer Auswucht- oder Messmaschine (60), die einen Grundkörper (4, 5, 5') mit einer Aufnahmeöffnung (6) für das zu spannende Bauteil (2), eine innerhalb des Grundkörpers (4, 5, 5') axial beweglich angeordnete Spannzange (11) mit Spannzungen (26) zum zentrischen Spannen des Bauteils (2) und ein zwischen einer Spannstellung und Lösestellung axial verstellbares Betätigungselement (12) zur Betätigung der Spannzange (11) enthält, wobei die Spannzungen (26) der Spannzange (11) einen dem zu spannenden Bauteil (2) zugeordneten vorderen Spannbereich (27) und einen dem Grundkörper (4, 5, 5') zugeordneten hinteren Spannbereich (28) aufweisen und das Betätigungselement (12) eine dem vorderen Spannbereich (27) der Spannzungen (26) zugeordnete erste äußere Konusfläche (15) und mindestens eine dem hinteren Spannbereich (28) der Spannzungen (26) zugeordnete zweite äußere Konusfläche (16) enthält,
**dadurch gekennzeichnet, dass**
an dem dem zu spannenden Bauteil (2) zugeordneten vorderen Spannbereich (27) der Spannzungen (26) Formschlusselemente (50) zu einem Eingriff in ein Gewinde (33) des zu spannenden Bauteils (2) angeordnet sind.

2. Spannvorrichtung (1), insbesondere Auswucht- oder Messadapter (1), nach Anspruch 1,
**dadurch gekennzeichnet, dass**
die Formschlusselemente (50) Gewindesegmente, insbesondere Außengewindesegmente oder Außengewindesegmente mit abgerundeten Gewindespitzen, sind, wobei insbesondere die Außengewindesegmente (50) derart an den Spannzungen (26) angeordnet sind, dass, wenn die Spannzungen (26) mittels der Konusflächen komplett radial nach außen verschoben sind, ein zwar unterbrochenes, aber einen fortlaufenden Gewindegang oder mehrere fortlaufende Gewindegänge ausbildendes Außengewinde ergeben zu einer (Schraub-)-bzw. Formschlussverbindung mit einem in einer axialen Öffnung (18) des zu spannenden Bauteils (2) angeordneten korrespondierenden Innengewinde (33).

3. Spannvorrichtung (1), insbesondere Auswucht- oder Messadapter (1), nach einem der voranstehenden Ansprüche,
**dadurch gekennzeichnet, dass**
die erste (15) und/oder zweite Konusfläche (16) an dem Betätigungselement (12) derart ausgebildet sind, dass bei komplett radial nach außen verschobenen Spannzungen (26) die Formschlusselemente (50), insbesondere Außengewindesegmente, nicht vollständig in ein Innengewinde (33) in einer axialen Öffnung (18) des zu spannenden Bauteils (2) eingreifen.

4. Spannvorrichtung (1), insbesondere Auswucht- oder Messadapter (1), nach einem der voranstehenden Ansprüche,
**dadurch gekennzeichnet, dass**
die zweite Konusfläche (16) so gegenüber der ersten Konusfläche (15) axial versetzt ist, dass bei einer Verschiebung des Betätigungselements (12) aus der Lösestellung in die Spannstellung zunächst die erste Konusfläche (15) und später die zweite Konusfläche (16) in Eingriff mit den Spannzungen (26) gelangen.

5. Spannvorrichtung (1), insbesondere Auswucht- oder Messadapter (1), nach dem voranstehenden Anspruch,
**dadurch gekennzeichnet, dass**
wenn zunächst die erste Konusfläche (15) in Eingriff gelangt, die Spannzungen (26) rein radial in dem Grundkörper (4, 5, 5') verschoben werden, und, wenn später die zweite Konusfläche (16) in Eingriff gelangt, die Spannzungen (26) radial und axial in dem Grundkörper (4, 5, 5') verschoben werden.

6. Spannvorrichtung (1), insbesondere Auswucht- oder Messadapter (1), nach einem der Ansprüche 1 bis 3,
**dadurch gekennzeichnet, dass**
die zweite Konusfläche (16) so gegenüber der ersten Konusfläche (15) axial versetzt ist, dass bei einer Verschiebung des Betätigungselements (12) aus der Lösestellung in die Spannstellung die erste äußere Konusfläche (15) und die zweite Konusfläche (16) gleichzeitig in Eingriff mit den Spannzungen (26) gelangen.

7. Spannvorrichtung (1), insbesondere Auswucht- oder Messadapter (1), nach Anspruch 6,
**dadurch gekennzeichnet, dass**
wenn gleichzeitig die erste und die zweite Konusfläche (15, 16) in Eingriff gelangen, die Spannzungen (26) radial und axial in dem Grundkörper (4, 5, 5') verschoben werden.

8. Spannvorrichtung (1), insbesondere Auswucht- oder Messadapter (1), nach einem der voranstehenden Ansprüche,
**dadurch gekennzeichnet, dass**
die Spannzungen (26) an der Außenseite, insbesondere an der Außenseite im Bereich des hinteren Spannbereichs (28), eine äußere konische Anlagefläche (37) zur Anlage an einer inneren konischen Spannfläche (9) des Grundkörpers (4, 5, 5') aufweisen.

9. Spannvorrichtung (1), insbesondere Auswucht- oder Messadapter (1), nach einem der voranstehenden Ansprüche,
**dadurch gekennzeichnet, dass**
die innere konische Spannfläche (9) des Grundkörpers (4, 5, 5') so an dem Grundkörper (4, 5, 5') angeordnet ist, dass, wenn bei einer Verschiebung des Betätigungselements (12) bei einem Lösen von der Spannstellung in die Lösestellung, die innere konische Spannfläche (9) des Grundkörpers (4, 5, 5') in Eingriff mit der äußeren konischen Anlagefläche (37) der Spannzungen (26) gelangt, die Spannzungen (26) radial in dem Grundkörper (4, 5, 5') verschoben werden.

10. Spannvorrichtung (1), insbesondere Auswucht- oder Messadapter (1), nach einem der voranstehenden Ansprüche,
**dadurch gekennzeichnet, dass**
die Spannzungen (26) der Spannzange (11) an einem hülsenförmigen Sockel (24) angeordnet sind, wobei die Spannzungen (26) der Spannzange (11) durch axiale vordere Schlitze (25) voneinander getrennt sind und/oder dass in dem Sockel (24) zu den vorderen Schlitzen (25) axial ausgerichtete hintere Schlitze (29) angeordnet sind, die zu den vorderen Schlitzen (25) hin offen und nach hinten geschlossen sind.

11. Spannvorrichtung (1), insbesondere Auswucht- oder Messadapter (1), nach einem der voranstehenden Ansprüche 1 bis 9, **dadurch gekennzeichnet, dass**
die Spannzungen (26) der Spannzange (11) separate einzelne Bauteile (26') sind, insbesondere vier, fünf, sechs, sieben oder acht Spannzungen (26), welche ringförmig und/oder zentrisch um das Betätigungselement (12) angeordnet sind.

12. Spannvorrichtung (1), insbesondere Auswucht- oder Messadapter (1), nach dem voranstehenden Anspruch,
**gekennzeichnet, durch**
eine, insbesondere vorgespannte und/oder gefedert gelagerte, Führungsplatte (40') mit mit den Spannzungen (26') im Eingriff stehenden Führungselementen (36) zur radialen Führung der Spannzungen (26') und/oder zu einer Verdrehsicherung der Spannzungen (26').

13. Spannvorrichtung (1), insbesondere Auswucht- oder Messadapter (1), nach einem der voranstehenden Ansprüche,
**dadurch gekennzeichnet, dass**
die Spannzange (11) an ihrem unteren Ende durch Druckfedern (39) beaufschlagt ist.

14. Spannvorrichtung (1), insbesondere Auswucht- oder Messadapter (1), nach dem voranstehenden Anspruch,
**dadurch gekennzeichnet, dass**
zwischen dem unteren Ende der Spannzange (11) und den Druckfedern (39) eine Druckscheibe (40) angeordnet ist.

15. Spannvorrichtung (1), insbesondere Auswucht- oder Messadapter (1), nach einem der voranstehenden Ansprüche,
**dadurch gekennzeichnet, dass**
die Spannzange (11) über einen Lagerring (41) axial verschiebbar in dem Grundkörper (4, 5, 5') angeordnet ist.

16. Spannvorrichtung (1), insbesondere Auswucht- oder Messadapter (1), nach einem der voranstehenden Ansprüche,
**dadurch gekennzeichnet, dass**
in der axialen Aufnahmeöffnung (6) des Grundkörpers (4, 5, 5') eine Lagerbuchse (10) angeordnet ist und/oder dass das Betätigungselement (12) über eine Lagerbuchse (19) in dem Grundkörper (4, 5, 5') gelagert ist.

17. Spannvorrichtung (1), insbesondere Auswucht- oder Messadapter (1), nach einem der voranstehenden Ansprüche,
**dadurch gekennzeichnet, dass**
das Betätigungselement (12) eine erste und/oder zweite Mitnehmerfläche (42, 43) aufweist, welche bei einer Verschiebung des Betätigungselements (12) beim Spannen aus der Lösestellung in die Spannstellung bzw. beim Lösen aus der Spannstellung in die Lösestellung in eine Anlage mit einer ersten und/oder zweiten Anlagefläche (44, 48) an der Spannzange (11) gelangen/gelangt.

18. Spannvorrichtung (1), insbesondere Auswucht- oder Messadapter (1), nach einem der voranstehenden Ansprüche,
**dadurch gekennzeichnet, dass**
die Spannzange (11) eine dritte Mitnehmerfläche (49) aufweist, welche bei einer Verschiebung des Betätigungselements (12) beim Lösen aus der Spannstellung in die Lösestellung in eine Anlage mit einer dritten Anlagefläche (51) an dem zu spannenden Bauteil (2) gelangt.

19. Spannvorrichtung (1), insbesondere Auswucht- oder Messadapter (1), nach mindestens einem der voranstehenden Ansprüche,
**gekennzeichnet, durch**
Anschlusselemente an dem Betätigungselement (12) für den Anschluss des Betätigungselements (12) an eine Vorrichtung (21), mittels welcher das Betätigungselement (12) zum Spannen und/oder Lösen verschiebbar ist, insbesondere eine hydraulische, pneumatische oder mechanische Vorrichtung (21).

20. Spannvorrichtung (1), insbesondere Auswucht- oder Messadapter (1), nach mindestens einem der voranstehenden Ansprüche,
**dadurch gekennzeichnet, dass**
der Grundkörper (4, 5, 5') mittels einer Druckfeder (22) gegen eine Betätigungsvorrichtung (21), insbesondere einem, insbesondere hydraulisch oder pneumatisch betätigbaren, Kolben (21) verspannbar ist, welche Druckfeder (22) insbesondere in Sacklöcher (17) in dem Grundkörper (4, 5, 5') und/oder in der Betätigungsvorrichtung (21) aufgenommen ist.

21. Spannvorrichtung (1), insbesondere Auswucht- oder Messadapter (1), nach mindestens einem der voranstehenden Ansprüche,
**dadurch gekennzeichnet, dass**
die Bearbeitungsmaschine (60) eine Wuchtvorrichtung oder eine Messvorrichtung oder eine Vorrichtung zu einer Fertigung und/oder Formgebung des zu spannenden Bauteils (2) ist und/oder dass das zu spannende Bauteil (2) ein Werkzeughalter, insbesondere mit einem Steilkegel, oder ein Werkstück ist, welches insbesondere in der axialen Öffnung (18) ein Innengewinde (33) vorsieht.

22. Auswucht- oder Messmaschine (60) mit einer Spannvorrichtung (1), insbesondere einem Auswucht- oder Messadapter (1), **dadurch gekennzeichnet, dass**
die Spannvorrichtung (1), insbesondere der Auswucht- oder Messadapter (1), nach einem der Ansprüche 1 bis 21 ausgebildet ist.

## Claims

1. Clamping device (1), in particular balancing or measuring adapter (1), for clamping a component (2) on a rotating machine element (60), in particular on a balancing or measuring machine (60), which clamping device comprises a basic body (4, 5, 5') with a receiving opening (6) for the component (2) to be clamped, a clamping collet (11) which is axially movably arranged inside the basic body (4, 5, 5') and has clamping tongues (26) for the central clamping of the component (2), and an actuating element (12), which is axially adjustable between a clamping position and a release position, for actuating the clamping collet (11), wherein the clamping tongues (26) of the clamping collet (11) have a front clamping region (27) assigned to the component (2) to be clamped and a rear clamping region (28) assigned to the basic body (4, 5, 5'), and the actuating element (12) contains a first outer conical surface (15) assigned to the front clamping region (27) of the clamping tongues (26) and at least one second outer conical surface (16) assigned to the rear clamping region (28) of the clamping tongues (26),
**characterized in that**
on the front clamping region (27) of the clamping tongues (26), which clamping region is assigned to the component (2) to be clamped, there are arranged form-fitting elements (50) for engagement in a thread (33) of the component (2) to be clamped.

2. Clamping device (1), in particular balancing or measuring adapter (1), according to Claim 1,
**characterized in that**
the form-fitting elements (50) are threaded segments, in particular external threaded segments or external threaded segments with rounded thread tips, wherein in particular the external threaded segments (50) are arranged on the clamping tongues (26) in such a way that, when the clamping tongues (26) are completely radially shifted outwards by means of the conical surfaces, an external thread which, although interrupted, forms a continuous thread groove or a plurality of continuous thread grooves results in a (screw) or form-fitting connection with a corresponding internal thread (33) arranged in an axial opening (18) of the component (2) to be clamped.

3. Clamping device (1), in particular balancing or measuring adapter (1), according to either of the preceding claims,
**characterized in that**
the first (15) and/or second conical surface (16) on the actuating element (12) are/is formed in such a way that, when the clamping tongues (26) are completely radially shifted outwards, the form-fitting elements (50), in particular external threaded segments, do not fully engage in an internal thread (33) in an axial opening (18) of the component (2) to be clamped.

4. Clamping device (1), in particular balancing or measuring adapter (1), according to any one of the preceding claims,
**characterized in that**
the second conical surface (16) is axially offset relative to the first conical surface (15) so that, when the actuating element (12) is displaced from the release position into the clamping position, first of all the first conical surface (15) and then the second conical surface (16) enter into engagement with the clamping tongues (26).

5. Clamping device (1), in particular balancing or measuring adapter (1), according to the preceding claim, **characterized in that**
when first of all the first conical surface (15) enters into engagement, the clamping tongues (26) are shifted purely radially in the basic body (4, 5, 5') and, when the second conical surface (16) then enters into engagement, the clamping tongues (26) are shifted radially and axially in the basic body (4, 5, 5').

6. Clamping device (1), in particular balancing or measuring adapter (1), according to any one of Claims 1 to 3,
**characterized in that**
the second conical surface (16) is axially offset relative to the first conical surface (15) so that, when the actuating element (12) is displaced from the release position into the clamping position, the first outer conical surface (15) and the second conical surface (16) simultaneously enter into engagement with the clamping tongues (26).

7. Clamping device (1), in particular balancing or measuring adapter (1), according to Claim 6,
**characterized in that**
when the first and the second conical surfaces (15, 16) enter into engagement simultaneously, the clamping tongues (26) are shifted radially and axially in the basic body (4, 5, 5').

8. Clamping device (1), in particular balancing or measuring adapter (1), according to any one of the preceding claims,
**characterized in that**
the clamping tongues (26) on the outside, in particular on the outside in the region of the rear clamping region (28), have an outer conical contact surface (37) for contact with an inner conical clamping surface (9) of the basic body (4, 5, 5').

9. Clamping device (1), in particular balancing or measuring adapter (1), according to any one of the preceding claims,
**characterized in that**
the inner conical clamping surface (9) of the basic body (4, 5, 5') is arranged on the basic body (4, 5, 5') in such a way that, when the actuating element (12) is displaced during release from the clamping position into the release position, the inner conical clamping surface (9) of the basic body (4, 5, 5') enters into engagement with the outer conical contact surface (37) of the clamping tongues (26), and the clamping tongues (26) are displaced radially in the basic body (4, 5, 5').

10. Clamping device (1), in particular balancing or measuring adapter (1), according to any one of the preceding claims,
**characterized in that**
the clamping tongues (26) of the clamping collet (11) are arranged on a sleeve-shaped base (24), wherein the clamping tongues (26) of the clamping collet (11) are separated from one another by axial front slots (25), and/or **in that** in the base (24) there are arranged rear slots (29) which are axially aligned with respect to the front slots (25) and which are open towards the front slots (25) and closed to the rear.

11. Clamping device (1), in particular balancing or measuring adapter (1), according to any one of the preceding Claims 1 to 9,
**characterized in that**
the clamping tongues (26) of the clamping collet (11) are separate individual components (26'), in particular four, five, six, seven or eight clamping tongues (26), which are arranged annularly and/or centrally around the actuating element (12).

12. Clamping device (1), in particular balancing or measuring adapter (1), according to the preceding claim, **characterized by**
an, in particular pretensioned and/or spring-loaded, guide plate (40') having guide elements (36) which are in engagement with the clamping tongues (26'), for the radial guidance of the clamping tongues (26') and/or for securing the clamping tongues (26') against rotation.

13. Clamping device (1), in particular balancing or measuring adapter (1), according to any one of the preceding claims,
**characterized in that**
the clamping collet (11) is acted upon by compression springs (39) at its lower end.

14. Clamping device (1), in particular balancing or measuring adapter (1), according to the preceding claim, **characterized in that**
a thrust washer (40) is arranged between the lower end of the clamping collet (11) and the compression springs (39).

15. Clamping device (1), in particular balancing or measuring adapter (1), according to any one of the preceding claims,
**characterized in that**
the clamping collet (11) is arranged axially displaceably in the basic body (4, 5, 5') via a bearing ring (41).

16. Clamping device (1), in particular balancing or measuring adapter (1), according to any one of the preceding claims,
**characterized in that**
a bearing bushing (10) is arranged in the axial receiving opening (6) of the basic body (4, 5, 5"), and/or **in that** the actuating element (12) is mounted in the basic body (4, 5, 5') via a bearing bushing (19).

17. Clamping device (1), in particular balancing or measuring adapter (1), according to any one of the preceding claims,
**characterized in that**
the actuating element (12) has a first and/or second driver surface (42, 43) which, when the actuating element (12) is displaced during the clamping from the release position into the clamping position or during the release from the clamping position into the release position, enter/enters into contact with a first and/or second contact surface (44, 48) on the clamping collet (11).

18. Clamping device (1), in particular balancing or measuring adapter (1), according to any one of the preceding claims,
**characterized in that**
the clamping collet (11) has a third driver surface (49) which, when the actuating element (12) is displaced during the release from the clamping position into the release position, enters into contact with a third contact surface (51) on the component (2) to be clamped.

19. Clamping device (1), in particular balancing or measuring adapter (1), according to at least one of the preceding claims,
**characterized by**
connecting elements on the actuating element (12) for connecting the actuating element (12) to a device (21) by means of which the actuating element (12) is displaceable for the clamping and/or release, in particular to a hydraulic, pneumatic or mechanical device (21).

20. Clamping device (1), in particular balancing or measuring adapter (1), according to at least one of the preceding claims,
**characterized in that**
the basic body (4, 5, 5') can be tensioned by means of a compression spring (22) against an actuating device (21), in particular a piston (21), which in particular can be actuated hydraulically or pneumatically, which compression spring (22) is received in particular in blind holes (17) in the basic body (4, 5, 5') and/or in the actuating device (21).

21. Clamping device (1), in particular balancing or measuring adapter (1), according to at least one of the preceding claims,
**characterized in that**
the processing machine (60) is a balancing device or a measuring device or a device for manufacturing and/or shaping the component (2) to be clamped, and/or **in that** the component (2) to be clamped is a tool holder, in particular with a steep taper, or a workpiece, which provides an internal thread (33) in particular in the axial opening (18).

22. Balancing or measuring machine (60) with a clamping device (1), in particular a balancing or measuring adapter (1),
**characterized in that**
the clamping device (1), in particular the balancing or measuring adapter (1), is designed according to any one of Claims 1 to 21.

## Revendications

1. Dispositif de serrage (1), notamment adaptateur d'équilibrage ou de mesure (1), pour serrer un composant (2) sur un élément de machine rotatif (60), notamment une machine d'équilibrage ou de mesure (60), qui contient un corps de base (4, 5, 5') avec une ouverture de réception (6) pour le composant à serrer (2), une pince de serrage (11) agencée de manière mobile axialement à l'intérieur du corps de base (4, 5, 5') avec des languettes de serrage (26) pour le serrage centré du composant (2) et un élément d'actionnement (12) réglable axialement entre une position de serrage et une position de desserrage pour l'actionnement de la pince de serrage (11), les languettes de serrage (26) de la pince de serrage (11) présentant une zone de serrage avant (27) associée au composant à serrer (2) et une zone de serrage arrière (28) associée au corps de base (4, 5, 5') et l'élément d'actionnement (12) contenant une première surface conique extérieure (15) associée à la zone de serrage avant (27) des languettes de serrage (26) et au moins une deuxième surface conique extérieure (16) associée à la zone de serrage arrière (28) des languettes de serrage (26),
**caractérisé en ce que**
des éléments à complémentarité de forme (50) sont agencés sur la zone de serrage avant (27) des languettes de serrage (26), associée au composant à serrer (2), pour un engagement dans un filetage (33) du composant à serrer (2).

2. Dispositif de serrage (1), notamment adaptateur d'équilibrage ou de mesure (1), selon la revendication 1,
**caractérisé en ce que**
les éléments de liaison par complémentarité de forme (50) sont des segments de filetage, notamment des segments de filetage extérieur ou des segments de filetage extérieur avec des pointes de filetage arrondies, les segments de filetage extérieur (50) étant notamment agencés sur les languettes de serrage (26) de telle sorte que, lorsque les languettes de serrage (26) sont déplacées complètement radialement vers l'extérieur au moyen des surfaces coniques, il en résulte un filetage extérieur certes interrompu, mais réalisant un pas de vis continu ou plusieurs pas de vis continus, pour une liaison (vissée) ou par complémentarité de forme avec un filetage intérieur (33) correspondant agencé dans une ouverture axiale (18) du composant à serrer (2).

3. Dispositif de serrage (1), notamment adaptateur d'équilibrage ou de mesure (1), selon l'une quelconque des revendications précédentes,
**caractérisé en ce que**
la première (15) et/ou la deuxième surface conique (16) sont réalisées sur l'élément d'actionnement (12) de telle sorte que, lorsque les languettes de serrage (26) sont complètement déplacées radialement vers l'extérieur, les éléments à complémentarité de forme (50), notamment les segments de filetage extérieur, ne s'engagent pas complètement dans un filetage intérieur (33) dans une ouverture axiale (18) du composant à serrer (2).

4. Dispositif de serrage (1), notamment adaptateur d'équilibrage ou de mesure (1), selon l'une quelconque des revendications précédentes,
**caractérisé en ce que**
la deuxième surface conique (16) est décalée axialement par rapport à la première surface conique (15) de telle sorte que, lors d'un déplacement de l'élément d'actionnement (12) de la position de desserrage à la position de serrage, d'abord la première surface conique (15) et ultérieurement la deuxième surface conique (16) viennent en prise avec les languettes de serrage (26).

5. Dispositif de serrage (1), notamment adaptateur d'équilibrage ou de mesure (1), selon la revendication précédente,
**caractérisé en ce que**
lorsque la première surface conique (15) vient d'abord en prise, les languettes de serrage (26) sont déplacées purement radialement dans le corps de base (4, 5, 5'), et, lorsque la deuxième surface conique (16) vient ultérieurement en prise, les languettes de serrage (26) sont déplacées radialement et axialement dans le corps de base (4, 5, 5').

6. Dispositif de serrage (1), notamment adaptateur d'équilibrage ou de mesure (1), selon l'une quelconque des revendications 1 à 3,
**caractérisé en ce que**
la deuxième surface conique (16) est décalée axialement par rapport à la première surface conique (15) de telle sorte que, lors d'un déplacement de l'élément d'actionnement (12) de la position de desserrage à la position de serrage, la première surface conique extérieure (15) et la deuxième surface conique (16) viennent simultanément en prise avec les languettes de serrage (26).

7. Dispositif de serrage (1), notamment adaptateur d'équilibrage ou de mesure (1), selon la revendication 6,
**caractérisé en ce que**
lorsque la première et la deuxième surface conique (15, 16) viennent simultanément en prise, les languettes de serrage (26) sont déplacées radialement et axialement dans le corps de base (4, 5, 5').

8. Dispositif de serrage (1), notamment adaptateur d'équilibrage ou de mesure (1), selon l'une quelconque des revendications précédentes,
**caractérisé en ce que**
les languettes de serrage (26) présentent sur le côté extérieur, notamment sur le côté extérieur dans la zone de la zone de serrage arrière (28), une surface d'appui conique extérieure (37) pour l'appui sur une surface de serrage conique intérieure (9) du corps de base (4, 5, 5').

9. Dispositif de serrage (1), notamment adaptateur d'équilibrage ou de mesure (1), selon l'une quelconque des revendications précédentes,
**caractérisé en ce que**
la surface de serrage conique intérieure (9) du corps de base (4, 5, 5') est agencée sur le corps de base (4, 5, 5') de telle sorte que, lors d'un déplacement de l'élément d'actionnement (12) lors d'un desserrage de la position de serrage à la position de desserrage, la surface de serrage conique intérieure (9) du corps de base (4, 5, 5') vient en prise avec la surface d'appui conique extérieure (37) des languettes de serrage (26), les languettes de serrage (26) sont déplacées radialement dans le corps de base (4, 5, 5').

10. Dispositif de serrage (1), notamment adaptateur d'équilibrage ou de mesure (1), selon l'une quelconque des revendications précédentes,
**caractérisé en ce que**
les languettes de serrage (26) de la pince de serrage (11) sont agencées sur un socle (24) en forme de douille, les languettes de serrage (26) de la pince de serrage (11) étant séparées les unes des autres par des fentes avant axiales (25) et/ou **en ce que** dans le socle (24) sont agencées des fentes arrière (29) orientées axialement par rapport aux fentes avant (25), qui sont ouvertes vers les fentes avant (25) et fermées vers l'arrière.

11. Dispositif de serrage (1), notamment adaptateur d'équilibrage ou de mesure (1), selon l'une quelconque des revendications 1 à 9 précédentes,
**caractérisé en ce que**
les languettes de serrage (26) de la pince de serrage (11) sont des composants individuels séparés (26'), notamment quatre, cinq, six, sept ou huit languettes de serrage (26), qui sont agencées de manière annulaire et/ou centrée autour de l'élément d'actionnement (12).

12. Dispositif de serrage (1), notamment adaptateur d'équilibrage ou de mesure (1), selon la revendication précédente,
**caractérisé par**
une plaque de guidage (40'), notamment précontrainte et/ou montée sur ressort, avec des éléments de guidage (36) en prise avec les languettes de serrage (26') pour le guidage radial des languettes de serrage (26') et/ou pour un blocage en rotation des languettes de serrage (26').

13. Dispositif de serrage (1), notamment adaptateur d'équilibrage ou de mesure (1), selon l'une quelconque des revendications précédentes,
**caractérisé en ce que**
la pince de serrage (11) est sollicitée à son extrémité inférieure par des ressorts de compression (39).

14. Dispositif de serrage (1), notamment adaptateur d'équilibrage ou de mesure (1), selon la revendication précédente,
**caractérisé en ce que**
un disque de pression (40) est agencé entre l'extrémité inférieure de la pince de serrage (11) et les ressorts de compression (39).

15. Dispositif de serrage (1), notamment adaptateur d'équilibrage ou de mesure (1), selon l'une quelconque des revendications précédentes,
**caractérisé en ce que**
la pince de serrage (11) est agencée de manière à pouvoir être déplacée axialement dans le corps de base (4, 5, 5') par l'intermédiaire d'une bague de palier (41).

16. Dispositif de serrage (1), notamment adaptateur d'équilibrage ou de mesure (1), selon l'une quelconque des revendications précédentes,
**caractérisé en ce que**
un coussinet (10) est agencé dans l'ouverture de réception axiale (6) du corps de base (4, 5, 5'') et/ou **en ce que** l'élément d'actionnement (12) est monté dans le corps de base (4, 5, 5') par l'intermédiaire d'un coussinet (19).

17. Dispositif de serrage (1), notamment adaptateur d'équilibrage ou de mesure (1), selon l'une quelconque des revendications précédentes,
**caractérisé en ce que**
l'élément d'actionnement (12) présente une première et/ou une deuxième surface d'entraînement (42, 43) qui, lors d'un déplacement de l'élément d'actionnement (12) lors du serrage de la position de desserrage à la position de serrage ou lors du desserrage de la position de serrage à la position de desserrage, viennent/viennent en appui avec une première et/ou une deuxième surface d'appui (44, 48) sur la pince de serrage (11).

18. Dispositif de serrage (1), notamment adaptateur d'équilibrage ou de mesure (1), selon l'une quelconque des revendications précédentes,
**caractérisé en ce que**
la pince de serrage (11) présente une troisième surface d'entraînement (49) qui, lors d'un déplacement de l'élément d'actionnement (12) lors du desserrage de la position de serrage à la position de desserrage, vient en appui avec une troisième surface d'appui (51) sur le composant à serrer (2).

19. Dispositif de serrage (1), notamment adaptateur d'équilibrage ou de mesure (1), selon au moins l'une quelconque des revendications précédentes,
**caractérisé par**
des éléments de raccordement sur l'élément d'actionnement (12) pour le raccordement de l'élément d'actionnement (12) à un dispositif (21) au moyen duquel l'élément d'actionnement (12) peut être déplacé pour le serrage et/ou le desserrage, notamment un dispositif hydraulique, pneumatique ou mécanique (21).

20. Dispositif de serrage (1), notamment adaptateur d'équilibrage ou de mesure (1), selon au moins l'une quelconque des revendications précédentes,
**caractérisé en ce que**
le corps de base (4, 5, 5') peut être serré au moyen d'un ressort de compression (22) contre un dispositif d'actionnement (21), notamment un piston (21) pouvant être actionné notamment de manière hydraulique ou pneumatique, lequel ressort de compression (22) est reçu notamment dans des trous borgnes (17) dans le corps de base (4, 5, 5') et/ou dans le dispositif d'actionnement (21).

21. Dispositif de serrage (1), notamment adaptateur d'équilibrage ou de mesure (1), selon au moins l'une quelconque des revendications précédentes,
**caractérisé en ce que**
la machine d'usinage (60) est un dispositif d'équilibrage ou un dispositif de mesure ou un dispositif pour une fabrication et/ou un façonnage du composant à serrer (2) et/ou **en ce que** le composant à serrer (2) est un porte-outil, notamment avec un cône d'inclinaison, ou une pièce qui prévoit notamment un filetage intérieur (33) dans l'ouverture axiale (18).

22. Machine d'équilibrage ou de mesure (60) avec un dispositif de serrage (1), notamment un adaptateur d'équilibrage ou de mesure (1),
**caractérisé en ce que**
le dispositif de serrage (1), notamment l'adaptateur d'équilibrage ou de mesure (1), est réalisé selon l'une quelconque des revendications 1 à 21.
